# EUROPEAN PATENT SPECIFICATION

(11) **EP 4 242 032 B1**
(45) Date of publication and mention of the grant of the patent: **22.01.2025**
(21) Application number: 23158970.6
(22) Date of filing: 28.02.2023
(51) Int. Cl.: B60K 6/387, B60K 6/547, B60K 6/48

(54) **HYBRID VEHICLE**
HYBRIDFAHRZEUG
VÉHICULE HYBRIDE

(30) Priority: 10.03.2022 JP 2022037039
(43) Date of publication of application: 13.09.2023
(73) Proprietor: Suzuki Motor Corporation, Hamamatsu-shi, Shizuoka 432-8611 (JP)
(72) Inventor: ITO, Yoshiki, Hamamatsu-shi 432-8611 (JP); HAGURA, Ryuhei, Hamamatsu-shi 432-8611 (JP)
(74) Representative: Plasseraud IP

(56) References cited:
- EP-A2- 1 270 301
- WO-A1-2020/182323
- DE-A1- 102006 036 758
- DE-A1- 102020 203 195

## Description

### 1 Technical Field

The present invention generally relates to a hybrid vehicle.

### 2 Background Art

Japanese Patent First Publication No. 2014-201126 discloses a hybrid vehicle in which a dual-clutch transmission equipped with two clutches is mounted.

The above type of dual-clutch transmission includes an input system, an output system, and a plurality of gear trains. The input system includes a first input shaft connected to an internal combustion engine through a first clutch and a second input shaft connected to the internal combustion engine through a second clutch. The output system is connected to driven wheels of the vehicle and works to achieve transmission of drive power between itself and the driven wheels. Some of the gear trains are disposed between the first input shaft and the output system, while the other gear trains are arranged between the second input shaft and the output system. The gear trains are designed to have gear ratios different from each other.

The dual-clutch transmission includes a first motor generator and a second motor generator. The first motor generator is connected to the first input shaft so that drive power is transmittable therebetween. The second motor generator is connected to the second input shaft so that drive power is transmittable therebetween. The dual-clutch transmission works to selectively execute an engine-drive mode and a motor-drive mode. The engine-drive mode is to switch one of the first and second clutches to an engaged state to operate the driven wheels of the vehicle using the internal combustion engine. The motor-drive mode is to stop the internal combustion engine and operate the driven wheels using a corresponding one of the first and second motor generators.

The above described dual-clutch transmission, however, has a drawback in that two clutch sets each of which includes a clutch disc, a clutch cover, and a flywheel (i.e., the first and second clutches) are needed, thereby resulting in increases in size and production cost of the transmission.

Other examples of background art can be found in DE102006036758A1, and DE102020203195A1.

### SUMMARY OF THE INVENTION

The present invention was mode in view of the above problem. It is an object of the invention to provide a hybrid vehicle which is capable of smoothly changing gears of a transmission without use of a plurality of clutches and enables the transmission to be reduced in size and production cost thereof.

According to one aspect of the invention, there is provided a hybrid vehicle which is equipped with a transmission working to transmit drive power produced by an internal combustion engine to a driven wheel and change a speed of the drive power. The transmission comprises: (a) an input shaft to which the drive power produced by the internal combustion engine is transmitted; (b) a first intermediate shaft which is arranged coaxially with the input shaft and rotatable relative to the input shaft the first intermediate shaft having the input shaft extending inside the first intermediate shaft;
(c) a second intermediate shaft which is arranged coaxially with the input shaft
   aligned with the first intermediate shaft in an axial direction of the input shaft, and rotatable relative to the input shaft; the second intermediate shaft having the input shaft extending inside the second intermediate shaft;
(d) an output shaft which extends parallel to the first intermediate shaft and the
   second intermediate shaft and serves to deliver the drive power to the driven wheel; (e) a first rotating electrical machine which is connected to the first intermediate shaft to transmit drive power therebetween, (f) a second rotating electrical machine which is connected to the second intermediate shaft to transmit drive power therebetween, (g) first gear sets each of which works to connect the first intermediate shaft with the
   output shaft to transmit drive power therebetween and which establish a plurality of gears in the transmission which are different in gear ratio from each other; (h) second gear sets each of which works to connect the second intermediate shaft with the output shaft to transmit drive power therebetween and which establish a plurality of gears in the transmission which are different in gear ratio than those of the first gear sets; and (i) a first switching member which works to switch among a neutral position, a first position, and a second position. The first position is to achieve connection of the input shaft and the first intermediate shaft. The second position is to achieve connection of the input shaft and the second intermediate shaft. The first switching member is disposed between the first intermediate shaft and the second intermediate shaft in the axial direction of the input shaft.

### BENEFICIAL ADVANTAGES OF THE INVENTION

The above structure is capable of smoothly changing the gears of the transmission without use of a plurality of clutches and enables the transmission to be reduced in size and production cost thereof.

### BRIEF DESCRIPTION OF THE DRAWINGS

Fig. 1 is a configuration diagram which illustrates a hybrid vehicle according to an embodiment of the invention.
Fig. 2 is a configuration diagram which illustrates a transmission mounted in a hybrid vehicle according to an embodiment of the invention.
Fig. 3 is a view which demonstrates drive modes of a hybrid vehicle according to an embodiment of the invention.
Fig. 4 is a timing chart which demonstrates gear changing tasks performed by a hybrid vehicle according to an embodiment of the invention.

### MODE FOR CARRYING OUT THE INVENTION

A hybrid vehicle according to an embodiment of the invention is equipped with a transmission working to transmit drive power produced by an internal combustion engine to a driven wheel and change a speed of the drive power. The transmission comprises: (a) an input shaft to which the drive power produced by the internal combustion engine is transmitted; (b) a first intermediate shaft which is arranged coaxially with the input shaft and rotatable relative to the input shaft, (c) a second intermediate shaft which is arranged coaxially with the input shaft, aligned with the first intermediate shaft in an axial direction of the input shaft, and rotatable relative to the input shaft; (d) an output shaft which extends parallel to the first intermediate shaft and the second intermediate shaft and serves to deliver the drive power to the driven wheel; (e) a first rotating electrical machine which is connected to the first intermediate shaft to transmit drive power therebetween, (f) a second rotating electrical machine which is connected to the second intermediate shaft to transmit drive power therebetween, (g) first gear sets each of which works to connect the first intermediate shaft with the output shaft to transmit drive power therebetween and which establish a plurality of gears in the transmission which are different in gear ratio from each other; (h) second gear sets each of which works to connect the second intermediate shaft with the output shaft to transmit drive power therebetween and which establish a plurality of gears in the transmission which are different in gear ratio than those of the first gear sets; and (i) a first switching member which works to switch among a neutral position, a first position, and a second position. The first position is to achieve connection of the input shaft and the first intermediate shaft. The second position is to achieve connection of the input shaft and the second intermediate shaft.

The above structure of the transmission mounted in the hybrid vehicle ensures a smooth gear change in the transmission without use of a plurality of clutches and enables the transmission to be reduced in size and produced at a decreased cost.

### EMBODIMENT

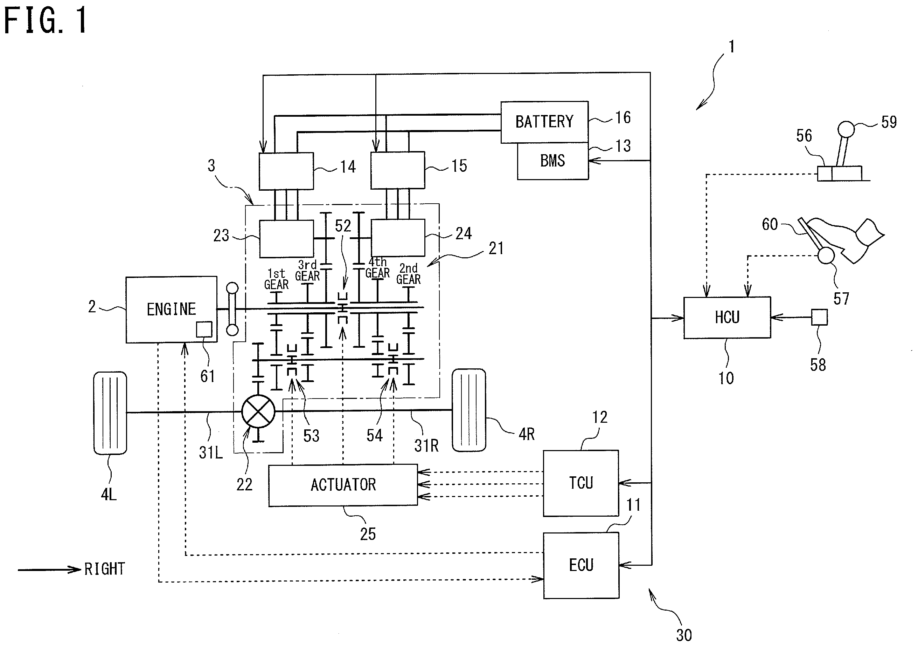

The hybrid vehicle 1 according to an embodiment of the invention will be described below with reference to the drawings. Figs. 1 to 4 are views which illustrate the hybrid vehicle 1 according to the embodiment of the invention.

The structure of the hybrid vehicle 1 will first be described below.

The hybrid vehicle 1 (which will also be merely referred to as a vehicle), as illustrated in Fig. 1, includes the engine 2 implemented by an internal combustion engine, the transmission 3, the driven wheels 4L and 4R, the HCU (Hybrid Control Unit) 10 working to totally control an operation of the vehicle 1, the ECU (Engine Control Unit) 11 working to control an operation of the engine 2, the TCU (Transmission Control Unit) 12 working to control an operation of the transmission 3, the BMS (Battery Management System) 13, the odd-numbered gear inverter 14, the even-numbered gear inverter 15, and the storage battery 16.

The engine 2 is equipped with a plurality of cylinders. In this embodiment, the engine 2 is designed to perform a sequence of four stroke: intake, compression, expansion (also called combustion or power), and exhaust strokes of a piston in each cylinder.

The transmission 3 works to change gears (i.e., gear ratios) thereof to change the degree of drive power or torque, as inputted from the engine 2, to deliver it to the left and right driven wheels 4L and 4R through the left and right drive shafts 31L and 31R, thereby driving the driven wheels 4L and 4R.

The transmission 3 includes the gear shifting mechanism 21, the differential 22, the odd-numbered gear motor generator 23, the even-numbered gear motor generator 24, and the actuator 25.

The transmission 3 is designed as a so-called AMT (Automated Manual Transmission) and works to change the gears thereof using the actuator 25 controlled by the TCU 12.

The differential 22 delivers drive power, as outputted from the gear shifting mechanism 21, to the driven wheels 4L and 4R through the drive shafts 31L and 31R.

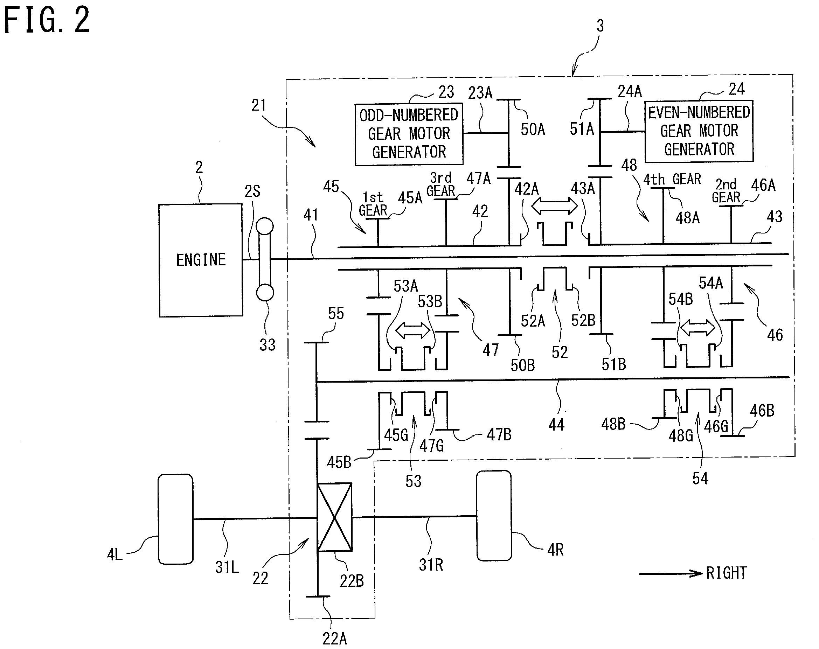

The gear shifting mechanism 21, as illustrated in Fig. 2, includes the input shaft 41, the hollow cylindrical odd-numbered gear intermediate shaft 42, the hollow cylindrical even-numbered gear intermediate shaft 43, and the output shaft 44. The input shaft 41, the odd-numbered gear intermediate shaft 42, the even-numbered gear intermediate shaft 43, and the output shaft 44 are oriented to extend in the width-wise direction of the vehicle 1. In the following discussion, a direction in which the vehicle 1 heads will also be referred to as a longitudinal direction. The width-wise direction of the vehicle 1 will also be referred to as a lateral direction.

The odd-numbered gear intermediate shaft 42 will also be referred to as a first intermediate shaft. The even-numbered gear intermediate shaft 43 will also be referred to as a second intermediate shaft.

The input shaft 41 is connected to the crankshaft 2S of the engine 2 through the coupling 33 made of a damper, so that drive power (i.e., engine torque), as produced by the engine 2, is transmitted to the input shaft 41 through the coupling 33. The coupling 33 connects the crankshaft 2S and the input shaft 41 together at all times so that the drive power is transmittable between the crankshaft 2S and the input shaft 41.

When the vehicle 1 is accelerating, the coupling 33 works to absorb a variation in torque or rotation transmitted from the crankshaft 2S of the engine 2 to the input shaft 41, while when the vehicle 1 is decelerating, the coupling 33 works to absorb a variation in torque or rotation transmitted from the input shaft 41 to the engine 2.

The odd-numbered gear intermediate shaft 42 is arranged outside the input shaft 41 to be coaxial with the input shaft 41 and rotatable relative to the input shaft 41. Specifically, the odd-numbered gear intermediate shaft 42 is hollow cylindrical to have the input shaft 41 disposed therein and retained by the input shaft 41 to be rotatable relative to the input shaft 41.

The even-numbered gear intermediate shaft 43 is arranged outside the input shaft 41 to be coaxial with the input shaft 41 and rotatable relative to the input shaft 41. Specifically, the even-numbered gear intermediate shaft 43 is hollow cylindrical to have the input shaft 41 disposed therein and retained by the input shaft 41 rotatably relative to the input shaft 41.

The even-numbered gear intermediate shaft 43 is aligned with the odd-numbered gear intermediate shaft 42 in an axial direction of the input shaft 41 and located farther away from the engine 2 than the odd-numbered gear intermediate shaft 42 is. In other words, the engine 2, the odd-numbered gear intermediate shaft 42, and the even-numbered gear intermediate shaft 43 are arranged in this order from the left side of the input shaft 41.

The input shaft 41, the odd-numbered gear intermediate shaft 42, and the even-numbered gear intermediate shaft 43 are arranged coaxially with each other and extend parallel to each other. In other words, the input shaft 41, the odd-numbered gear intermediate shaft 42, and the even-numbered gear intermediate shaft 43 are oriented to have a common rotational center axis.

The output shaft 44 is arranged to extend parallel to the odd-numbered gear intermediate shaft 42 and the even-numbered gear intermediate shaft 43. The output shaft 44 extends to have a left end located more left than a left end of the odd-numbered gear intermediate shaft 42 is. The output shaft 44 also has a right end located more right than a right end of the even-numbered gear intermediate shaft 43.

The odd-numbered gear intermediate shat 42 and the output shaft 44 are configured to achieve transmission of drive power therebetween through each of the first speed gear set 45 and the third speed gear set 47. Specifically, each of the first speed gear set 45 and the third speed gear set 47 is configured to connect between the odd-numbered gear intermediate shat 42 and the output shaft 44 to transmit the drive power from the odd-numbered gear intermediate shat 42 to the output shaft 44 or from the output shaft 44 to the odd-numbered gear intermediate shat 42. Each of the first speed gear set 45 and the third speed gear set 47 constitutes a first gear set working to establish a plurality of odd-numbered gears different in gear ratio from each other in the transmission 3.

The first speed gear set 45 includes the first speed input gear 45A and the first speed output gear 45B. The first speed input gear 45A is rotatable together with the odd-numbered gear intermediate shaft 42. The first speed output gear 45B is rotatable relative to the output shaft 44 and meshes with the first speed input gear 45A. The third speed gear set 47 includes the third speed input gear 47A and the third speed output gear 47B. The third speed input gear 47A is rotatable together with the odd-numbered intermediate shaft 42. The third speed output gear 47B is rotatable relative to the output shaft 44 and meshes with the third speed input gear 47A. The first gear sets, as apparent from the above discussion, include the first speed input gear 45A and the third speed input gear 47A which are rotatable together with the odd-numbered gear intermediate shaft 42. The first gear sets also include the first speed output gear 45B and the third speed output gear 47B which are rotatable relative to the output shaft 44 and mesh with the first speed input gear 45A and the third speed input gear 47A, respectively.

The odd-numbered gear intermediate shaft 42 has mounted thereon the odd-numbered motor-driven gear 50B which is larger in diameter than the third speed input gear 47A. The third speed input gear 47A is larger in diameter than the first speed input gear 45A.

The output shaft 23A of the odd-numbered gear motor generator 23 has the odd-numbered motor-drive gear 50A mounted thereon. The odd-numbered motor-drive gear 50A meshes with the odd-numbered motor-driven gear 50B.

The odd-numbered motor-drive gear 50A and the odd-numbered motor-driven gear 50B in this embodiment constitute a first rotating electrical machine gear set. The odd-numbered motor-drive gear 50A constitutes a first drive gear. The odd-numbered motor-driven gear 50B constitutes a first driven gear.

The drive power, as produced by the odd-numbered gear motor generator 23, is transmitted from the odd-numbered motor-drive gear 50A to the odd-numbered gear intermediate shaft 42 through the odd-numbered motor-driven gear 50B. The odd-numbered gear motor generator 23 is located on the left side of the odd-numbered motor-drive gear 50A in an axial direction of the input shaft 41. In other words, the odd-numbered gear motor generator 23 is located at substantially the same position as that of the first speed input gear 45A or the third speed input gear 47A as defined in the axial direction of the input shaft 41.

The odd-numbered motor-drive gear 50A is smaller in diameter than the odd-numbered motor-driven gear 50B. The drive power or speed of rotation from the odd-numbered gear motor generator 23 to the odd-numbered gear intermediate shaft 42 is reduced by the odd-numbered motor-drive gear 50A and the odd-numbered motor-driven gear 50.

The first speed output gear 45B is larger in diameter than the first speed input gear 45A. The third speed output gear 47B is smaller in diameter than the third speed input gear 47A.

The drive power is transmittable between the even-numbered gear intermediate shaft 43 and the output shaft 44 using the second speed gear set 46 or the fourth speed gear set 48. In other words, the even-numbered gear intermediate shaft 43 and the output shaft 44 are connectable together so that each of the second speed gear set 46 and the fourth speed gear set 48 works to deliver the drive power from the even-numbered gear intermediate shaft 43 to the output shaft 44 or from the output shaft 44 to the even-numbered gear intermediate shaft 43. The second speed gear set 46 and the fourth speed gear set 48 serve as second gear sets which establish a plurality of even-numbered gears different in gear ratio from each other in the transmission 3.

The second speed gear set 46 includes the second speed input gear 46A and the second speed output gear 46B. The second speed input gear 46A is rotatable together with the even-numbered gear intermediate shaft 43. The second speed output gear 46B is rotatable relative to the output shaft 44 and meshes with the second speed input gear 46A. The fourth speed gear set 48 includes the fourth speed input gear 48A and the fourth speed output gear 48B. The fourth speed input gear 48A is rotatable together with the even-numbered intermediate shaft 43. The fourth speed output gear 48B is rotatable relative to the output shaft 44 and meshes with the fourth speed input gear 48A. The second gear sets, as apparent from the above discussion, include the second speed input gear 46A and the fourth speed input gear 48A which are rotatable together with the even-numbered gear intermediate shaft 43. The second gear sets also include the second speed output gear 46B and the fourth speed output gear 48B which are rotatable relative to the output shaft 44 and mesh with the second speed input gear 46A and the fourth speed input gear 48A, respectively.

The even-numbered gear intermediate shaft 43 has the even-numbered motor-driven gear 51B mounted thereon. The even-numbered motor-driven gear 51B is larger in diameter than the fourth speed input gear 48A. The fourth speed input gear 48A is larger in diameter than the second speed input gear 46A.

The even-numbered gear motor generator 24 has the output shaft 24A on which the even-numbered motor-drive gear 51A is mounted. The even-numbered motor-drive gear 51A meshes with the even-numbered motor-driven gear 51B.

The even-numbered gear motor generator 24 is located on the right side of the even-numbered motor-drive gear 51A in the axial direction of the input shaft 41. In other words, the even-numbered gear motor generator 24 is located at substantially the same position as that of the fourth speed input gear 48A or the second speed input gear 46A, as defined in the axial direction of the input shaft 41.

The even-numbered motor-drive gear 51A and the even-numbered motor-driven gear 51B in this embodiment serve as a second rotating electrical machine gear set. The even-numbered motor-drive gear 51A constitutes a second drive gear. The even-numbered motor-driven gear 51B constitutes a second driven gear.

The even-numbered motor-drive gear 51A is smaller in diameter than the even-numbered motor-driven gear 51B. The drive power or speed of rotation from the even-numbered gear motor generator 24 to the even-numbered gear intermediate shaft 43 is reduced by the even-numbered motor-drive gear 51A or the even-numbered motor-driven gear 51B.

The second speed output gear 46B is larger in diameter than the second speed input gear 46A. The fourth speed output gear 48B is smaller in diameter than the fourth speed input gear 48A.

The input gears: the first speed input gear 45A, the second speed input gear 46A, the third speed input gear 47A, and the fourth speed input gear 48A have diameters increasing in this order. The output gears: the first speed output gear 45B, the second speed output gear 46B, the third speed output gear 47B, the fourth speed output gear 48B have diameters decreasing in this order.

With the above gear arrangements, the gear ratio of the first gear of the transmission 3 is larger than those of the second, third, and fourth gears of the transmission 3. The second, third, and fourth gears have gear ratios which become smaller in this order. The transmission 3, therefore, has four forward gears, but however, the number of gears thereof may be optional.

The first speed input gear 45A and the third speed input gear 47A work as first intermediate shaft gears. The first speed output gear 45B and the third speed output gear 47B work as first output shaft gears. The second speed input gear 46A and the fourth speed input gear 48A work as second intermediate shaft gears. The second speed output gear 46B and the fourth speed output gear 48B work as second output shaft gears.

The input shaft 41 has the rings-shaped first dog-clutch 52 mounted thereon. The first dog-clutch 52 is arranged between the odd-numbered gear intermediate shaft 42 and the even-numbered gear intermediate shaft 43 in the axial direction of the input shaft 41. The first dog-clutch 52 is movable in the axial direction of the input shaft 41 and rotatable along with the input shaft 41.

The first dog-clutch 52 has a plurality of dog teeth 52A arranged on a left end thereof and a plurality of dog teeth 52B arranged on a right end thereof.

The odd-numbered gear intermediate shaft 42 has a right end which faces the first dog-clutch 52 and on which a plurality of dog teeth 42A are formed. Similarly, the even-numbered gear intermediate shaft 43 has a left end which faces the first dog-clutch 52 and on which a plurality of dog teeth 43A are formed.

The first dog-clutch 52 is moved by the actuator 25 in the axial direction of the input shaft 41.

When the first dog-clutch 52 is moved by the actuator 25 from a neutral position thereof toward the odd-numbered gear intermediate shaft 42 and reaches an odd-numbered gear position where the dog teeth 52A mesh with the dog teeth 42A of the odd-numbered gear intermediate shaft 42, it causes the input shaft 41 to connect with the odd-numbered gear intermediate shaft 42 through the first dog-clutch 52.

The above connection between the input shaft 41 and the odd-numbered gear intermediate shaft 42 causes the input shaft 41 to rotate along with the odd-numbered gear intermediate shaft 42, thereby delivering the drive power, as produced by the engine 2, from the input shaft 41 to the odd-numbered gear intermediate shaft 42. The odd-numbered gear position, as referred to in this embodiment, will also be referred to as a first position.

When the first dog-clutch 52 is moved by the actuator 25 from a neutral position thereof toward the even-numbered gear intermediate shaft 43 and reaches an even-numbered gear position where the dog teeth 52B mesh with the dog teeth 43A of the even-numbered gear intermediate shaft 43, it causes the input shaft 41 to connect with the even-numbered gear intermediate shaft 43 through the first dog-clutch 52.

The above connection between the input shaft 41 and the even-numbered gear intermediate shaft 43 causes the input shaft 41 to rotate along with the even-numbered gear intermediate shaft 43, thereby delivering the drive power, as produced by the engine 2, from the input shaft 41 to the even-numbered gear intermediate shaft 43. The even-numbered gear position, as referred to in this embodiment, will also be referred to as a second position.

When the first dog-clutch 52 is at the neutral position where it is placed out of engagement with the odd-numbered gear intermediate shaft 42 or the even-numbered gear intermediate shaft 43, it causes the input shaft 41, the odd-numbered gear intermediate shaft 42, and the even-numbered gear intermediate shaft 43 to rotate relative to each other, so that the drive power, as produced by the engine 2, is not transmitted to the odd-numbered gear intermediate shaft 42 and the even-numbered gear intermediate shaft 43.

The odd-numbered motor-driven gear 50B is mounted on a portion of the length of the odd-numbered gear intermediate shaft 42 which is located closest to the first dog-clutch 52. The first speed input gear 45A and the third speed input gear 47A are arranged on the opposite side of the odd-numbered motor-driven gear 50B to the first dog-clutch 52.

The odd-numbered motor-driven gear 50B, the third speed input gear 47A, and the first speed input gear 45A are arranged away from the first dog-clutch 52 in the axial direction of the odd-numbered gear intermediate shaft 42 and designed to have diameters which are different to decrease stepwise in this order.

The even-numbered motor-driven gear 51B is arranged on a portion of the length of the even-numbered gear intermediate shaft 43 which is located closest to the first dog-clutch 52. The second speed input gear 46A and the fourth speed input gear 48A are arranged on the opposite side of the even-numbered motor-driven gear 51B to the first dog-clutch 52.

The even-numbered motor-driven gear 51B, the fourth speed input gear 48A, and the second speed input gear 46A are arranged away from the first dog-clutch 52 in this order and designed to have diameters which are different to decrease stepwise in this order.

The output shaft 44 has the ring-shaped second dog-clutch 53 and the ring-shaped third dog-clutch 54 mounted thereon.

The second dog-clutch 53 is arranged between the first speed output gear 45B and the third speed output gear 47B in the axial direction of the output shaft 44. The second dog-clutch 53 is movable in the axial direction of the output shaft 44 and also rotatable along with the output shaft 44.

The second dog-clutch 53 includes a plurality of dog teeth 53A arranged on a left end thereof and a plurality of dog teeth 53B arranged on a right end thereof.

The first speed output gear 45B has a plurality of dog teeth 45G mounted on a right end thereof. The third speed output gear 47B has a plurality of dog teeth 47G mounted on a left end thereof.

The second dog-clutch 53 is moved by the actuator 25 in the axial direction of the output shaft 44.

When the second dog-clutch 53 is moved by the actuator 25 from a neutral position thereof to the first speed output gear 45B, so that the dog teeth 53A mesh with the dog teeth 45G of the first speed output gear 45B, the second dog-clutch 53 achieves the connection of the first speed output gear 45B with the output shaft 44.

The above connection between the first speed output gear 45B and the output shaft 44 causes the first speed output gear 45B to rotate together with the output shaft 44, so that the drive power is transmittable between the odd-numbered gear intermediate shaft 42 and the output shaft 44 through the first speed gear set 45.

When the second dog-clutch 53 is moved by the actuator 25 from the neutral position toward the third speed output gear 47B, and the dog teeth 53B mesh with the dog teeth 47G of the third speed output gear 47B, it causes the third speed output gear 47B to connect with the output shaft 44 through the second dog-clutch 53.

The above connection between the third speed output gear 47B and the output shaft 44 causes the third speed output gear 47B to rotate together with the output shaft 44, so that the drive power is transmittable between the odd-numbered gear intermediate shaft 42 and the output shaft 44 through the third speed gear set 47.

The third dog-clutch 54 is arranged between the second speed output gear 46B and the fourth speed output gear 48B in the axial direction of the output shaft 44. The third dog-clutch 54 is movable in the axial direction of the output shaft 44 and also rotatable along with the output shaft 44.

The third dog-clutch 54 has a plurality of dog teeth 54A mounted on a right end thereof and a plurality of dog teeth 54B mounted on a left end thereof.

The second speed output gear 46B has a plurality of dog teeth 46G formed on a left end thereof. The fourth speed output gear 48B has a plurality of dog teeth 48G formed on a right end thereof.

The third dog-clutch 54 is moved by the actuator 25 in the axial direction of the output shaft 44.

When the third dog-clutch 54 is moved by the actuator 25 from a neutral position thereof toward the second speed output gear 46B, and the dog teeth 54A mesh with the dog teeth 46G of the second speed output gear 46B, it causes the second speed output gear 46B to connect with the output shaft 44 through the third dog-clutch 54.

The above connection between the second speed output gear 46B and the output shaft 44 causes the second speed output gear 46B to rotate together with the output shaft 44, so that the drive power is transmittable between the even-numbered gear intermediate shaft 43 and the output shaft 44 through the second speed gear set 46.

When the third dog-clutch 54 is moved by the actuator 25 from a neutral position thereof toward the fourth speed output gear 48B, and the dog teeth 54B mesh with the dog teeth 48G of the fourth speed output gear 48B, it causes the fourth speed output gear 48B to connect with the output shaft 44 through the third dog-clutch 54.

The above connection between the fourth speed output gear 48B and the output shaft 44 causes the fourth speed output gear 48B to rotate together with the output shaft 44, so that the drive power is transmittable between the even-numbered gear intermediate shaft 43 and the output shaft 44 through the fourth speed gear set 48.

As apparent from the above discussion, the transmission 3 in this embodiment works to select the first or third gear ratio between the odd-numbered gear intermediate shaft 42 and the output shaft 44, so that the transmission 3 is placed at the first or third speed position. Alternatively, the transmission 3 works to select the second or fourth gear ratio between the even-numbered gear intermediate shaft 43 and the output shaft 44, so that the transmission 3 is placed at the second or fourth speed position.

A power transmission path through which the drive power produced by the engine 2 is transmitted when the transmission 3 is in the first speed position where the first gear ratio is established or the third speed position where the third gear ratio is established will be a path extending from the crankshaft 2S of the engine 2 to the output shaft 44 through the odd-numbered gear intermediate shaft 42 and the first speed gear set 45 or the third speed gear set 47.

A power transmission path through which the drive power produced by the engine 2 is transmitted when the transmission 3 is in the second speed position where the second gear ratio is established or the fourth speed position where the fourth gear ratio is established will be a path extending from the crankshaft 2S of the engine 2 to the output shaft 44 through the input shaft 41, the even-numbered gear intermediate shaft 43, and the second speed gear set 46 or the fourth speed gear set 48.

A power transmission path through which the drive power produced by the odd-numbered gear motor generator 23 is transmitted when the transmission 3 is in the first or third speed position will be a path extending from the odd-numbered gear motor generator 23 to the output shaft 44 through the odd-numbered motor-drive gear 50A, the odd-numbered motor-driven gear 50B, the odd-numbered gear intermediate shaft 42, and the first speed gear set 45 or the third speed gear set 47.

A power transmission path through which the drive power produced by the even-numbered gear motor generator 24 is transmitted when the transmission 3 is in the second or fourth speed position will be a path extending the even-numbered gear motor generator 24 to the output shaft 44 through the even-numbered motor-drive gear 51A, the even-numbered motor-driven gear 51B, the even-numbered gear intermediate shaft 43, and the second speed gear set 46 or the fourth speed gear set 48.

In this embodiment, the first dog-clutch 52 works as a first switching member. The second dog-clutch 53 works as a second switching member. The third dog-clutch 54 works as a third switching member.

As apparent from the above discussion, the driving of the vehicle 1 is achieved using the gear set 45, 46, 47 or 48 by selecting the operation state of the second dog-clutch 53 or the third dog-clutch 54 and controlling the drive power produced by the odd-numbered gear motor generator 23 or the even-numbered gear motor generator 24. For the sake of convenience, unless otherwise specified, the gear ratios or gears, as referred to herein, represents gear ratios or gears established in the power transmission paths through which the drive power produced by the engine 2 is transmitted. The gear change or gear shift means switching of the power transmission paths through which the drive power produced by the engine 2 is transmitted.

The output shaft 44 has the final drive gear 55 mounted on the left end thereof. The differential 22 includes the final driven gear 22A meshing with the final drive gear 55 and the differential mechanism 22B mounted on the final driven gear 22A.

The differential mechanism 22B is connected to the drive shafts 31L and 31R. The differential 22 works to distribute the drive power, as produced by the engine 2, to the drive shafts 31L and 31R using the differential mechanism 22B, which are, in turn, delivered to the driven wheels 4L and 4R.

Each of the HCU 10, the ECU 11, the TCT 12, and the BMS 13 is implemented by a computer unit equipped with a CPU (Central Processing Unit), a RAM (Random Access Memory, a ROM (Read Only Memory), a flash memory storing back-up data, an input port, and an output port.

The ROMs of the computers store a variety of constant numbers, a variety of maps, and logical programs for use in operating the computers as the HCU 10, the ECU 11, the TCU 12, and the BMS 13, respectively.

Specifically, each of the CPUs, in the RAM serving as a workspace, the program stored in the ROM to make each of the computer units function as a corresponding one of the HCU 10, the ECU 11, the TCU 12, and the BMS 13.

The ECU 11 works to control the quantity of air sucked into the engine 2, the quantity of fuel injected into the engine 2, the injection timing of the engine 2, and the ignition timing of the engine 2 to bring the degree of torque generated by the engine 2 into agreement with a target value outputted from the HCU 10.

The TCU 12 is responsive to a command from the HCU 10 to control the operation of the actuator 25 to move each of the first dog-clutch 52 and the second dog-clutch 53 or the third dog-clutch 54 between the neutral position thereof and a selected one of the odd-numbered gear positions where the odd gears (i.e., the odd gear ratios) are established or a selected one of the even-numbered gear positions where the even gears (i.e., the even gear ratios) are established.

The BMS 13 works to monitor the current state of the battery 16 and output information about the state of charge (SOC) of the battery 16 to the HCU 10.

Each of the odd-numbered gear inverter 14 and the even-numbered gear inverter 15 is responsive to a command from the HCU 10 to change direct power as supplied from the battery 16, to three-phase alternating power and delivers it to the even-numbered gear motor generator 2 or the odd-numbered gear motor generator 23 to bring the degree of torque outputted therefrom into agreement with a target value determined by the HCU 10. Each of the odd-numbered gear inverter 14 and the even-numbered gear inverter 15 also works to convert three-phase alternating power, as produced by the odd-numbered gear motor generator 23 or the even-numbered gear motor generator 24, into direct power to charge the battery 16.

The odd-numbered gear inverter 14 and the even-numbered gear inverter 15 output information about speeds of rotation of the odd-numbered gear motor generator 23 and the even-numbered gear motor generator 24 to the HCU 10. The battery 16 may be made of a secondary battery, such as a lithium-ion battery.

Each of the odd-numbered gear motor generator 23 and the even-numbered gear motor generator 24 selectively operates in a motor mode or a generator mode. The motor mode is a power generation mode in which each of the odd-numbered gear motor generator 23 and the even-numbered gear motor generator 24 is actuated by electrical power supplied from the battery 16 through a corresponding one of the odd-numbered gear inverter 14 and the even-numbered gear inverter 15 to produce drive power to move the vehicle 1. The generator mode is a regenerative power mode in which each of the odd-numbered gear motor generator 23 and the even-numbered gear motor generator 24 is actuated by torque (i.e., counter drive power) inputted thereinto from the driven wheels 4L and 4R through the differential 22 to generate electrical power.

The odd-numbered gear motor generator 23 in this embodiment constitutes a first rotating electrical machine. The even-numbered gear motor generator 24 in this embodiment constitutes a second electrical machine.

Referring back to Fig. 1, the HCU 10 is connected to the shift position sensor 56, the accelerator position sensor 57, and the vehicle speed sensor 58. The shift position sensor 56 detects one of positions (also called shift positions) of the shift lever 59 selected by a driver of the vehicle 1.

The shift positions include, for example, a *P*-position (i.e., parking position), an *N*-position (i.e., neutral position), a *R*-position (i.e., reverse position to achieve backward motion), a *D*-position (i.e., drive position to achieve forward motion), and a *B*-position (i.e., engine braking position). The *B*-position is a position of the shift lever 59 where the degree of engine braking higher than that in the *D*-position is produced.

The shift position sensor 56 outputs a signal indicative of one of the shift positions of the shift lever 59 selected by the driver to the HCU 10.

The accelerator position sensor 57 detects a position of the accelerator pedal 60 operated by the driver of the vehicle 1 (i.e., the degree of driver's effort on the accelerator pedal 60) and outputs a signal indicative thereof to the HCU 10. The vehicle speed sensor 58 measures the speed of the vehicle 1 and outputs a signal indicative thereof to the HCU 10.

The HCU 10 analyzes the position of the shift lever 59 detected by the shift position sensor 56, the position of the accelerator pedal 60 measured by the accelerator position sensor 57, and the vehicle speed measured by the vehicle speed sensor 58 to calculate the degree of drive power requested by the driver of the vehicle 1 (i.e., the degree of driver-requested torque) to select one of an *EV* mode or a *HEV* mode and switch a drive mode of the vehicle 1 to the selected one of the *EV* mode and the *HEV* mode.

The *EV* mode is a mode in which the vehicle 1 is driven by the odd-numbered gear motor generator 23 or the even-numbered gear motor generator 24 without use of drive power generated by the engine 2. The *HEV* mode is a mode in which the engine 2 is placed in an operation mode where the drive power generated by the engine 2 is transmittable to the drive wheels 4L and 4R.

In each of the *EV* mode and the *HEV* mode, the HCU 10 outputs commands to the ECU 11, the TCU 12, the odd-numbered gear inverter 14, and the even-numbered gear inverter 15 in order to produce the degree of driver-requested torque in a given range of the SOC of the battery 16.

The odd-numbered gear inverter 14 and the even-numbered gear inverter 15 are responsive to the commands from the HCU 10 to control drive powers or torques outputted by the odd-numbered gear motor generator 23 and the even-numbered gear motor generator 24, respectively. The ECU 11 is responsive to the command from the HCU 10 to control the degree of torque outputted by the engine 2.

The TCU 12 is responsive to the command from the HCU 10 to control the operation of the actuator 25 to switch the states of the first dog-clutch 52, the second dog-clutch 53, and the third dog-clutch 54 to perform the gear change.

The *EV* mode is a driving mode in which the engine 2 is stopped, and the odd-numbered gear motor generator 23 or the even-numbered gear motor generator 24 is actuated to produce the degree of driver's requested torque to move the vehicle 1.

In the *EV* mode, the engine 2 is not operated, so that the speed of the engine 2 is kept zero.

The *HEV* mode is a driving mode in which the engine 2 is basically operated to meet the degree of driver's requested torque to move the vehicle 1. Specifically, when a condition where the degree of torque generated only by the engine 2 is sufficient to meet the degree of driver's requested torque is encountered, only the engine 2 is operated to move the vehicle 1. Alternatively, when a condition where the degree of torque generated only by the engine 2 is insufficient to meet the degree of driver's requested torque is encountered, one of the odd-numbered gear motor generator 23 and the even-numbered gear motor generator 24 is additionally operated to meet the degree of driver's requested torque to move the vehicle 1.

In other words, the *HEV* mode includes a driving mode in which only the engine torque is used to move the vehicle 1 and a motor-assist mode in which both the engine torque and the motor torque are used to move the vehicle 1.

When it is required to change from one of the odd gear ratios to one of the even gear ratios or vice versa in the transmission 3, the HCU 10 analyses the information outputted from the shift position sensor 56, the accelerator position sensor 57, and the vehicle speed sensor 58 to control the operation of the ECU 11 to decrease the degree of drive power produced by the engine 2 down to a selected value.

Specifically, the HCU 10 controls the operation of the ECU 11 to close a throttle valve to regulate the quantity of air intake into the engine 2 to decrease the drive power down to the selected value.

When the drive power produced by the engine 2 is decreased down to the selected value, the HCU 10 controls the operation of the odd-numbered gear inverter 14 or the even-numbered gear inverter 15 to increase the torque which is outputted by the odd-numbered gear motor generator 23 and exerted on the odd-numbered gear intermediate shaft 42 equipped with the first speed gear set 45 and the third speed gear set 47 one of which achieves a current one of the gear ratios or which is outputted by the even-numbered gear motor generator 24 and exerted on the even-numbered gear intermediate shaft 43 equipped with the second speed gear set 46 and the fourth speed gear set 48 one of which establishes the current gear ratio in order to compensate for a decrease in driver power produced by the engine 2.

Subsequently, the HCU 10 controls the operations of the ECU 11 and the odd-numbered gear inverter 14 or the even-numbered gear inverter 15 to synchronize the speed of the odd-numbered gear intermediate shaft 42 or the even-numbered gear intermediate shaft 43 whichever is required to establish the next gear ratio to which the current gear ratio is to be changed with the speed of the input shaft 4.

Specifically, when the driver power produced by the engine 2 has dropped down to the selected value, the HCU 10 controls the operation of the TCU 12 to change one of the odd-numbered gear position and the even-numbered gear position of the first dog-clutch 52 which is achieving the current gear ratio to the neutral position thereof.

Subsequently, the HCU 10 controls the operations of the ECU 11 and the odd-numbered gear inverter 14 or the even-numbered gear inverter 15 to achieve synchronization of the speed of the odd-numbered gear intermediate shaft 42 or the even-numbered gear intermediate shaft 43 whichever is required to establish the next gear ratio with that of the input shaft 4.

Upon the synchronization of the speed of the odd-numbered gear intermediate shaft 42 with that of the input shaft 41 or the speed of the even-numbered gear intermediate shaft 43 with that of the input shaft 41, the HCU 10 controls the operation of the TCU 12 to move the first dog-clutch 52 from the neutral position thereof to the odd-numbered gear position or the even-numbered gear position which is required to establish the next gear ratio.

When it is required to change the odd gear ratio to the even gear ratio in the transmission 3, the HCU 10 shifts the first dog-clutch 52 from the neutral position to the even-numbered gear position thereof and then controls the operation of the ECU 11, the odd-numbered gear inverter 14, and the even-numbered gear inverter 15 to synchronize the speed of the second speed output gear 46B or the fourth speed output gear 48B with that of the output shaft 44. When such speed synchronization is completed, the third dog-clutch 54 works to connect the second speed output gear 46B or the fourth speed output gear 48B with the output shaft 44.

Alternatively, when it is required to change the even gear ratio to the odd gear ratio in the transmission 3, the HCU 10 shifts the first dog-clutch 52 from the neutral position to the odd-numbered gear position thereof and then controls the operation of the ECU 11, the odd-numbered gear inverter 14, and the even-numbered gear inverter 15 to synchronize the speed of the first speed output gear 45B or the third speed output gear 47B with that of the output shaft 44. When such speed synchronization is completed, the second dog-clutch 53 works to connect the first speed output gear 45B or the third speed output gear 47B with the output shaft 44.

When it is required to change the odd gear ratio to the even gear ratio in the transmission 3, the HCU 10 also works to shift the third dog-clutch 54 to the neutral position thereof simultaneously with when the first dog-clutch 52 is shifted to the neutral position thereof. Alternatively, when it is required to change the even gear ratio to the odd gear ratio in the transmission 3, the HCU 10 also works to shift the second dog-clutch 53 to the neutral position thereof simultaneously with when the first dog-clutch 52 is shifted to the neutral position thereof.

The HCU 10, the ECU 11, the TCU 12, the odd-numbered gear inverter 14, and the even-numbered gear inverter 15 constitute the controller 30.

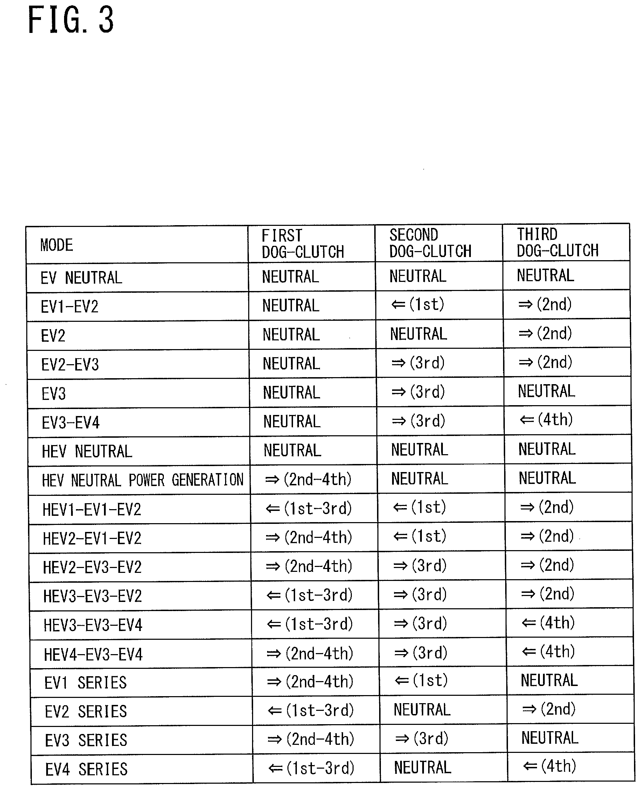

The switching operations of the first dog-clutch 52, the second dog-clutch 53, and the third dog-clutch 54 in each of the *EV* mode and the *HEV* mode will be described below with reference to a position shift schedule demonstrated in Fig. 3.

### 1 EV NEUTRAL MODE

The *EV* neutral mode is included in the *EV* mode which is entered when the shift lever 59 is shifted to in the *N*-position or the *P*-position. Each of the first dog-clutch 52, the second dog-clutch 53, and the third dog-clutch 54 is placed in the neutral position thereof.

Consequently, the engine 2, the odd-numbered gear motor generator 23, and the even-numbered gear motor generator 24 are out of connection with the driven wheels 4L and 4R, so that neither of the engine torque and the motor torque is transmitted from the engine 2, the odd-numbered gear motor generator 23, and the even-numbered gear motor generator 24 to the driven wheels 4L and 4R.

In the *EV* neutral mode, the second dog-clutch 53 and the third dog-clutch 54 are in the neutral position, but however, they may alternatively be out of the neutral position as long as the odd-numbered gear motor generator 23 and the even-numbered gear motor generator 24 are placed in off-positions thereof to produce no motor torque.

### 2 EV1-EV2 MODE

The *EV1-EV2* mode is included in the *EV* mode entered when the shift lever 59 is in the *D*-position or the *P*-position.

Specifically, when the *EV1-EV2* mode is entered, the first dog-clutch 52 is shifted to the neutral position, while the second dog-clutch 53 is shifted to the position which achieves the first gear (i.e., the first gear ratio) and will also be referred to below as a first gear position, and the third dog-clutch 54 is shifted to the position which achieves the second gear (i.e., the second gear ratio) and will also be referred to below as a second gear position.

When the vehicle 1 travels forward in the *EV1-EV2* mode, the torque, as produced by the odd-numbered gear motor generator 23, is delivered from the odd-numbered gear intermediate shaft 42 to the output shaft 44 through the first speed gear set 45, while the torque, as produced by the even-numbered gear motor generator 24, is delivered from the even-numbered gear intermediate shaft 43 to the output shaft 44 through the second speed gear set 46, thereby transmitting the torque produced by the motor generators 23 and 24 to the driven wheels 4L and 4R.

Alternatively, when the vehicle 1 is required to travel backward, the odd-numbered gear motor generator 23 and the even-numbered gear motor generator 24 are rotated in a reverse direction opposite that in which the vehicle 1 travels forward, so that torque produced by the odd-numbered gear motor generator 23 and the even-numbered gear motor generator 24 is transmitted to the driven wheels 4L and 4R through the same power transmission path as when the vehicle 1 travels forward.

When the vehicle 1 is being decelerated, the torque is transmitted from the driven wheels 4L and 4R to the output shaft 44 through the differential 22.

The torque transmitted to the output shaft 44 is delivered from the first speed gear set 45 to the odd-numbered gear motor generator 23 through the odd-numbered gear intermediate shaft 42 and also from the second speed gear set 46 to the even-numbered gear motor generator 24 through the even-numbered gear intermediate shaft 43, thereby placing the motor generators 23 and 24 in the regenerative mode.

### 3 EV2 MODE

The *EV2* mode is included in the *EV* mode entered when the shift lever 59 is in the *D*-position.

Specifically, when the *EV2* mode is entered, the first dog-clutch 52 and the second dog-clutch 53 are shifted to the neutral position, while the third dog-clutch 54 is shifted to the position which achieves the second gear ratio.

When the vehicle 1 travels forward in the *EV2* mode, the torque produced by the even-numbered gear motor generator 24 is delivered from the even-numbered gear intermediate shaft 43 to the output shaft 44 through the second speed gear set 46. In brief, the torque is transmitted the even-numbered gear motor generator 24 to the driven wheels 4L and 4R.

The *EV2* mode is entered for a temporary period of time when the *EV1-EV2* mode is changed to the *EV2-EV3* mode. Specifically, during a shift from the first gear to the third gear in the transmission 3, the driven wheels 4L and 4R are rotated or driven using the torque produced by the even-numbered gear motor generator 24.

### 4 EV2-EV3 MODE

The *EV2-EV3* mode is included in the *EV* mode entered when the shift lever 59 is in the D-position.

Specifically, when the *EV2-EV3* mode is entered, the first dog-clutch 52 is shifted to the neutral position, while the second dog-clutch 53 is shifted to the position which achieves the third gear ratio, and the third dog-clutch 54 is shifted to the position which achieves the second gear ratio.

When the vehicle 1 travels forward in the *EV2-EV3* mode, the torque produced by the odd-numbered gear motor generator 23 is delivered from the odd-numbered gear intermediate shaft 42 to the output shaft 44 through the third speed gear set 47. Simultaneously, the torque produced by the even-numbered gear motor generator 24 is delivered from the even-numbered gear intermediate shaft 43 to the output shaft 44 through the second speed gear set 46. In brief, the torque produced by the motor generators 23 and 24 is transmitted to the driven wheels 4L and 4R.

When the vehicle 1 is being decelerated, the torque is delivered from the driven wheels 4L and 4R to the output shaft 44 through the differential 22.

The torque transmitted to the output shaft 44 is delivered from the third speed gear set 47 to the odd-numbered gear motor generator 23 through the odd-numbered gear intermediate shaft 42 and also from the second speed gear set 46 to the even-numbered gear motor generator 24 through the even-numbered gear intermediate shaft 43, thereby placing the motor generators 23 and 24 in the regenerative mode.

The *EV2-EV3* mode is not entered in the R-position since the vehicle 1 does not need to be accelerated when traveling in the backward direction.

### 5 EV3 MODE

The *EV3* mode is included in the *EV* mode entered when the shift lever 59 is in the D-position.

Specifically, when the *EV3* mode is entered, the first dog-clutch 52 and the third dog-clutch 54 are shifted to the neutral positions thereof, while the second dog-clutch 53 is shifted to the position which achieves the third gear ratio.

When the vehicle 1 travels forward in the *EV3* mode, the torque produced by the odd-numbered gear motor generator 23 is delivered to the output shaft 44 through the third speed gear set 47. In brief, the torque is transmitted from the odd-numbered gear motor generator 23 to the driven wheels 4L and 4R.

The EV3 mode is entered for a temporary period of time when the *EV2-EV3* mode is changed to the *EV3-EV4* mode. Specifically, during a shift from the second gear to the fourth gear in the transmission 3, the driven wheels 4L and 4R are rotated using the torque produced by the odd-numbered gear motor generator 23.

### 6 EV3-EV4 MODE

The *EV3-EV4* mode is included in the *EV* mode entered when the shift lever 59 is in the D-position.

Specifically, when the *EV3-EV4* mode is entered, the first dog-clutch 52 is shifted to the neutral position, while the second dog-clutch 53 is shifted to the position which achieves the third gear ratio, and the third dog-clutch 54 is shifted to the position which achieves the fourth gear ratio.

When the vehicle 1 travels forward in the *EV3-EV4* mode, the torque produced by the odd-numbered gear motor generator 23 is delivered from the odd-numbered gear intermediate shaft 42 to the output shaft 44 through the third speed gear set 47, while the torque produced by the even-numbered gear motor generator 24 is delivered from the even-numbered gear intermediate shaft 43 to the output shaft 44 through the fourth speed gear set 48. In brief, the torque produced by the motor generators 23 and 24 is used to rotate the driven wheels 4L and 4R.

When the vehicle 1 is decelerating, the torque is transmitted from the driven wheels 4L and 4R to the output shaft 44 through the differential 22.

The torque transmitted to the output shaft 44 is then delivered from the third speed gear set 47 to the odd-numbered gear motor generator 23 through the odd-numbered gear intermediate shaft 42 and also from the fourth speed gear set 48 to the even-numbered gear motor generator 24 through the even-numbered gear intermediate shaft 43, thereby placing the motor generators 23 and 24 in the regenerative mode.

The *EV3-EV4* mode is not entered in the R-position since the vehicle 1 does not need to be accelerated when traveling in the backward direction.

### 7 HEV NEUTRAL MODE

The *HEV* neutral mode is included in the *HEV* mode entered when the shift lever 59 in in the *N*-position or the *P*-position.

When the HEV neutral mode is entered, each of the first dog-clutch 52, the second dog-clutch 53, and the third dog-clutch 54 is placed in the neutral position.

The engine 2, the odd-numbered gear motor generator 23, and the even-numbered gear motor generator 24 are, therefore, out of connection with the driven wheels 4L and 4R, so that no torque is delivered from the engine 2, the odd-numbered gear motor generator 23, and the even-numbered gear motor generator 24 to the driven wheels 4L and 4R.

In the *HEV* neutral mode, the second dog-clutch 53 and the third dog-clutch 54 are placed in the neutral position, but however, they may alternatively be out of the neutral position as long as the odd-numbered gear motor generator 23 and the even-numbered gear motor generator 24 are placed in off-positions thereof to produce no motor torque.

### 8 HEV NEUTRAL POWER GENERATION MODE

The *HEV* neutral power generation mode is included in the *HEV* mode entered when the shift lever 59 is in the *N*-position or the *P*-position.

When the *HEV* neutral power generation mode is entered, the first dog-clutch 52 is shifted to the even-numbered gear position, while the second dog-clutch 53 and the third dog-clutch 54 are placed in the neutral positions thereof.

In the *HEV* neutral power generation mode, the input shaft 41 is connected to the even-numbered gear intermediate shaft 43 through the first dog-clutch 52, so that the torque produced by the engine 2 is delivered from the input shaft 41 to the even-numbered gear motor generator 24 through the even-numbered gear intermediate shaft 43, thereby placing the even-numbered gear motor generator 24 in the power generation mode.

In the *HEV* neutral power generation mode, the second dog-clutch 53 and the third dog-clutch 54 are placed in the neutral position, but however, they may alternatively be out of the neutral position as long as the odd-numbered gear motor generator 23 and the even-numbered gear motor generator 24 are placed in off-positions thereof to produce no motor torque.

### 9 HEV1-EV1-EV2 MODE

The *HEV1-EV1-EV2* mode is included in the *HEV* mode entered when the shift lever 59 is in the D-position.

When the *HEV1-EV1-EV2* mode is entered, the first dog-clutch 52 is shifted to the odd-numbered gear position, the second dog-clutch 53 is shifted to the position which achieves the first gear ratio, and the third dog-clutch 54 is shifted to the position which achieves the second gear ratio.

When the vehicle 1 travels forward in the *HEV1-EV1-EV2* mode, the input shaft 41 is connected to the odd-numbered gear intermediate shaft 42.

The above connection of the input shaft 41 to the odd-numbered gear intermediate shaft 42 causes torque produced by the engine 2 and the odd-numbered gear motor generator 23 to be delivered from the odd-numbered gear intermediate shaft 42 to the output shaft 44 through the first speed gear set 45. The torque produced by the even-numbered gear motor generator 24 becomes transmittable from the even-numbered gear intermediate shaft 43 to the output shaft 46 through the second speed gear set 46.

Consequently, at least the engine 2 and the odd-numbered gear motor generator 23 are used to rotate the driven wheels 4L and 4R. When it is required to assist the engine 2, both the odd-numbered gear motor generator 23 and the even-numbered gear motor generator 24 are actuated.

When the vehicle 1 is traveling, and it is required to operate the odd-numbered gear motor generator 23 to generate electricity in the power generation mode using the torque produced by the engine 2, the torque outputted by the engine 2 is delivered from the odd-numbered gear intermediate shaft 42 to the odd-numbered gear motor generator 23. When the vehicle 1 is traveling, and it is required to operate the even-numbered gear motor generator 24 to generate electricity in the power generation mode using the torque produced by the engine 2, the torque outputted by the engine 2 is delivered from the odd-numbered gear intermediate shaft 42 to the output shaft 44 through the first speed gear set 45, to the second speed gear set 46, to the even-numbered gear intermediate shaft 43, and then to the even-numbered gear motor generator 24.

When it is required to operate the odd-numbered gear motor generator 23 and the even-numbered gear motor generator 24 in the regenerative mode, the torque is delivered from the output shaft 44 to the odd-numbered gear motor generator 23 through the first speed gear set 45 and the odd-numbered gear intermediate shaft 42 and also from the output shaft 44 to the even-numbered gear motor generator 24 through the second speed gear set 46 and the even-numbered gear intermediate shaft 43.

### 10 HEV2-EV1-EV2 MODE

The *HEV2-EVI-EV2* mode is included in the *HEV* mode entered when the shift lever 59 is in the *D*-position.

When the *HEV2-EV1-EV2* mode is entered, the first dog-clutch 52 is shifted to the even-numbered gear position, while the second dog-clutch 53 is shifted to the position which achieves the first gear ratio, and the third dog-clutch 54 is shifted to the position which achieves the second gear ratio.

When the vehicle 1 travels forward in the *HEV2-EV1-EV2* mode, the input shaft 41 is coupled with the even-numbered gear intermediate shaft 43.

The above coupling of the input shaft 41 with the even-numbered gear intermediate shaft 43 causes the torque produced by the engine 2 and the even-numbered gear motor generator 24 to be delivered from the even-numbered gear intermediate shaft 43 to the output shaft 44 through the second speed gear set 46. The torque produced by the odd-numbered gear motor generator 23 becomes transmittable from the odd-numbered gear intermediate shaft 42 to the output shaft 44 through the first speed gear set 45.

The above torque delivery causes the driven wheels 4L and 4R to be operated using at least the engine 2 and the even-numbered gear motor generator 24. When it is required to assist the engine 2, both the odd-numbered gear motor generator 23 and the even-numbered gear motor generator 24 are actuated.

When the vehicle 1 is traveling, and it is required to operate the even-numbered gear motor generator 24 to generate electricity in the power generation mode using the torque produced by the engine 2, the torque outputted by the engine 2 is delivered from the even-numbered gear intermediate shaft 43 to the even-numbered gear motor generator 24. When the vehicle 1 is traveling, and it is required to operate the odd-numbered gear motor generator 23 to generate electricity in the power generation mode using the torque produced by the engine 2, the torque outputted by the engine 2 is delivered from the even-numbered gear intermediate shaft 43 to the output shaft 44 through the second speed gear set 46, to the first speed gear set 45, to the odd-numbered gear intermediate shaft 42, and then to the odd-numbered gear motor generator 23.

When it is required to operate the odd-numbered gear motor generator 23 and the even-numbered gear motor generator 24 in the regenerative mode, the same operation as in the *HEV1-EV1-EV2* mode is performed.

### 11 HEV2-EV3-EV2 MODE

The *HEV2-EV3-EV2* mode is included in the *HEV* mode entered when the shift lever 59 is in the *D*-position.

When the *HEV2-EV3-EV2* mode is entered, the first dog-clutch 52 is shifted to the even-numbered gear position, while the second dog-clutch 53 is shifted to the position which achieves the third gear ratio, and the third dog-clutch 54 is shifted to the position which achieves the second gear ratio.

When the vehicle 1 travels forward in the *HEV2-EV3-EV2* mode, the input shaft 41 is connected to the even-numbered gear intermediate shaft 43.

The connection of the input shaft 41 to the even-numbered gear intermediate shaft 43 causes the torque produced by the engine 2 and the even-numbered gear motor generator 24 to be delivered from the even-numbered gear intermediate shaft 43 to the output shaft 44 through the second speed gear set 46. The torque produced by the odd-numbered gear motor generator 23 becomes transmittable from the odd-numbered gear intermediate shaft 42 to the output shaft 44 through the third speed gear set 47.

When it is required to assist the engine 2, both the odd-numbered gear motor generator 23 and the even-numbered gear motor generator 24 are actuated.

In the power generation mode, only the even-numbered gear motor generator 24 or both the odd-numbered gear motor generator 23 and the even-numbered gear motor generator 24 are actuated to generate the electricity using a portion of torque produced by the engine 2.

### 12 HEV3-EV3-EV2 MODE

The *HEV3-EV3-EV2* mode is included in the *HEV* mode entered when the shift lever 59 is in the D-position.

When the *HEV3-EV3-EV2* mode is entered, the first dog-clutch 52 is shifted to the odd-numbered gear position, the second dog-clutch 53 is shifted to the position which achieves the third gear ratio, and the third dog-clutch 54 is shifted to the position which achieves the second gear ratio.

When the vehicle 1 travels forward in the *HEV3-EV3-EV2* mode, the input shaft 41 is connected to the odd-numbered gear intermediate shaft 42.

The connection of the input shaft 41 to the odd-numbered gear intermediate shaft 42 causes the torque produced by the engine 2 and the odd-numbered gear motor generator 23 to be delivered from the odd-numbered gear intermediate shaft 42 to the output shaft 44 through the third speed gear set 47. The torque produced by the even-numbered gear motor generator 24 becomes transmittable from the even-numbered gear intermediate shaft 43 to the output shaft 44 through the second speed gear set 46.

When it is required to assist the engine 2, both the odd-numbered gear motor generator 23 and the even-numbered gear motor generator 24 are actuated.

In the power generation mode, only the odd-numbered gear motor generator 23 or both the odd-numbered gear motor generator 23 and the even-numbered gear motor generator 24 are actuated to generate the electricity using a portion of torque produced by the engine 2.

### 13 HEV3-EV3-EV4 MODE

The *HEV3-EV3-EV4* mode is included in the *HEV* mode entered when the shift lever 59 is in the D-position.

When *HEV3-EV3-EV4* mode is entered, the first dog-clutch 52 is shifted to the odd-numbered gear position, the second dog-clutch 53 is shifted to the position which achieves the third gear ratio, and the third dog-clutch 54 is shifted to the position which achieves the fourth gear ratio.

When the vehicle 1 travels forward in the *HEV3-EV3-EV4* mode, the input shaft 41 is connected to the odd-numbered gear intermediate shaft 42.

The connection of the input shaft 41 to the odd-numbered gear intermediate shaft 42 causes the torque produced by the engine 2 and the odd-numbered gear motor generator 23 to be delivered from the odd-numbered gear intermediate shaft 42 to the output shaft 44 through the third speed gear set 47. The torque produced by the even-numbered gear motor generator 24 becomes transmittable from the even-numbered gear intermediate shaft 43 to the output shaft 44 through the fourth speed gear set 48.

When it is required to assist the engine 2, both the odd-numbered gear motor generator 23 and the even-numbered gear motor generator 24 are actuated.

In the power generation mode, only the odd-numbered gear motor generator 23 or both the odd-numbered gear motor generator 23 and the even-numbered gear motor generator 24 are actuated to generate the electricity using a portion of torque produced by the engine 2.

### 14 HEV4-EV3-EV4 MODE

The *HEV4-EV3-EV4* mode is included in the *HEV* mode entered when the shift lever 59 is in the *D*-position.

When *HEV4-EV3-EV4* mode is entered, the first dog-clutch 52 is shifted to the even-numbered gear position, the second dog-clutch 53 is shifted to the position which achieves the third gear ratio, and the third dog-clutch 54 is shifted to the position which achieves the fourth gear ratio.

When the vehicle 1 travels forward in the *HEV4-EV3-EV4* mode, the input shaft 41 is connected to the even-numbered gear intermediate shaft 43.

The connection of the input shaft 41 to the even-numbered gear intermediate shaft 43 causes the torque produced by the engine 2 and the even-numbered gear motor generator 24 to be delivered from the even-numbered gear intermediate shaft 43 to the output shaft 44 through the fourth speed gear set 48. The torque produced by the odd-numbered gear motor generator 23 becomes transmittable from the odd-numbered gear intermediate shaft 42 to the output shaft 44 through the third speed gear set 47.

When it is required to assist the engine 2, both the odd-numbered gear motor generator 23 and the even-numbered gear motor generator 24 are actuated.

In the power generation mode, only the even-numbered gear motor generator 24 or both the odd-numbered gear motor generator 23 and the even-numbered gear motor generator 24 are actuated to generate the electricity using a portion of torque produced by the engine 2.

### 15 EV1 SERIES MODE

The *EV1* series mode is included in the *HEV* mode entered when the shift lever 59 is in the *D*-position or the *R*-position. The *EV1* series mode is a mode in which the torque produced by the odd-numbered gear motor generator 23 is delivered to the output shaft 44 through the first speed gear set 45, thereby moving the vehicle 1. The torque produced by the engine 2 is transmitted to the even-numbered gear motor generator 24 through the even-numbered gear intermediate shaft 43, thereby placing the even-numbered gear motor generator 24 in the power generation mode to generate electricity.

When the *EV1* series mode is entered, the first dog-clutch 52 is shifted to the even-numbered gear position, the second dog-clutch 53 is shifted to the position which achieves the first gear ratio, and the third dog-clutch 54 is placed in the neutral position.

When the vehicle 1 travels forward in the *EV1* series mode, the torque produced by the odd-numbered gear motor generator 23 is transmitted from the odd-numbered gear intermediate shaft 42 to the output shaft 44 through the first speed gear set 45.

When the vehicle 1 travels backward, the odd-numbered gear motor generator 23 is rotated in the reverse direction opposite the direction in which the vehicle 1 travels forward. The torque produced by the odd-numbered gear motor generator 23 is delivered to the output shaft 44 through the first speed gear set 45.

When the vehicle 1 is decelerating, the torque is transmitted from the driven wheels 4L and 4R to the differential 22, to the output shaft 44, to the first speed gear set 45 and the odd-numbered gear intermediate shaft 42, and then to the odd-numbered gear motor generator 23, thereby placing the odd-numbered gear motor generator 23 in the regenerative mode.

When it is required to generate electricity using the even-numbered gear motor generator 24, the torque produced by the engine 2 is delivered from the input shaft 41 to the even-numbered gear motor generator 24 through the even-numbered gear intermediate shaft 43.

The *EV1* series mode is performed mainly when the vehicle 1 is started at the D-position in the *HEV* mode or the vehicle 1 is moving backward at the R-position in the *HEV* mode.

The *EV1* series mode is also performed in an engine start mode to start the engine 1 for a temporary period of time during a shift from the *EV1-EV2* mode in the *EV*-mode to the *HEV2-EV1-EV2* mode in the *HEV* mode.

### 16 EV2 SERIES MODE

The *EV2* series mode is included in the *HEV* mode entered when the shift lever 59 is in the *D*-position. The EV2 series mode is a mode in which the vehicle 1 is driven using the even-numbered gear motor generator 24, and the torque produced by the engine 2 is used to actuate the odd-numbered gear motor generator 23 to generate electricity in the power generation mode.

When the *EV2* series mode is entered, the first dog-clutch 52 is shifted to the odd-numbered gear position, the second dog-clutch 53 is placed in the neutral position, and the third dog-clutch 54 is shifted to the position which achieves the second gear ratio.

When the vehicle 1 travels forward in the *EV2* series mode, the torque produced by the even-numbered gear motor generator 24 is delivered from the even-numbered gear intermediate shaft 43 to the output shaft 44 through the second speed gear set 46.

When the vehicle 1 is decelerating, the torque is transmitted from the driven wheels 4L and 4R to the differential 22, to the output shaft 44, to the second speed gear set 46 and the even-numbered gear intermediate shaft 43, and then to the even-numbered gear motor generator 24, thereby placing the even-numbered gear motor generator 24 in the regenerative mode.

When it is required to use the odd-numbered gear motor generator 23 to generate electricity in the power generation mode, the torque produced by the engine 2 is delivered from the input shaft 41 to the odd-numbered gear motor generator 23 through the odd-numbered gear intermediate shaft 42.

The *EV2* series mode is also performed in the engine start mode to start the engine 2 for a temporarily period of time during a shift from the *EV1-EV2* mode in the *EV*-mode to the *HEV1-EV1-EV2* mode in the *HEV* mode or to the *HEV3-EV3-EV2* mode in the *HEV* mode.

### 17 EV3 SERIES MODE

The *EV3* series mode is included in the *HEV* mode entered when the shift lever 59 is in the D-position. The *EV3* series mode is a mode in which the vehicle 1 is driven or moved using the odd-numbered gear motor generator 23, and the torque produced by the engine 2 is used to actuate the even-numbered gear motor generator 24 to generate electricity in the power generation mode.

When the *EV3* mode is entered, the first dog-clutch 52 is shifted to the even-numbered gear position, the second dog-clutch 53 is shifted to the position which achieves the third gear ratio, and the third dog-clutch 54 is placed in the neutral position.

When the vehicle 1 travels forward in the *EV3* mode, the torque produced by the odd-numbered gear motor generator 23 is delivered from the odd-numbered gear intermediate shaft 42 to the output shaft 44 through the third speed gear set 47.

When the vehicle 1 is decelerating, the torque is delivered from the driven wheels 4L and 4R to the output shaft 44 through the differential 22, to the third speed gear set 47 and the odd-numbered gear intermediate shaft 42, and then to the odd-numbered gear motor generator 23, thereby placing the odd-numbered gear motor generator 23 in the regenerative mode.

When it is required to actuate the even-numbered gear motor generator 24 to generate electricity in the power generation mode, the torque produced by the engine 2 is delivered from the input shaft 41 to the even-numbered gear motor generator 24 through the even-numbered gear intermediate shaft 43.

The *EV3* mode is also performed in the engine start mode to start the engine 2 for a temporarily period of time during a shift from the *EV1-EV3* mode in the *EV*-mode to the *HEV2-EV3-EV2* mode in the *HEV* mode or to the *HEV4-EV3-EV4* mode in the *HEV* mode.

### 18 EV4 SERIES MODE

The *EV4* series mode is included in the *HEV* mode entered when the shift lever 59 is in the *D*-position. The *EV4* series mode is a mode in which the vehicle 1 is driven or moved using the even-numbered gear motor generator 24, and the torque produced by the engine 2 is used to actuate the odd-numbered gear motor generator 23 to generate electricity in the power generation mode.

When the *EV4* series mode is entered, the first dog-clutch 52 is shifted to the odd-numbered gear position, the second dog-clutch 53 is placed in the neutral position, and the third dog-clutch 54 is shifted to the position which achieves the fourth gear ratio.

When the vehicle 1 travels forward in the *EV4* series mode, the torque produced by the even-numbered gear motor generator 24 is delivered from the even-numbered gear intermediate shaft 43 to the output shaft 44 through the fourth speed gear set 48.

When the vehicle 1 is decelerating, the torque is delivered from the driven wheels 4L and 4R to the output shaft 44 through the differential 22, to the fourth speed gear set 48 and the even-numbered gear intermediate shaft 43, and then to the even-numbered gear motor generator 24, thereby placing the even-numbered gear motor generator 24 in the regenerative mode.

When it is required to generate electricity using the odd-numbered gear motor generator 23, the torque produced by the engine 2 is delivered from the input shaft 41 to the odd-numbered gear motor generator 23 through the odd-numbered gear intermediate shaft 42.

The *EV4* mode is also performed in the engine start mode to start the engine 2 for a temporarily period of time during a shift from the *EV3-EV4* mode in the *EV*-mode to the *HEV3-EV3-EV4* mode in the *HEV* mode.

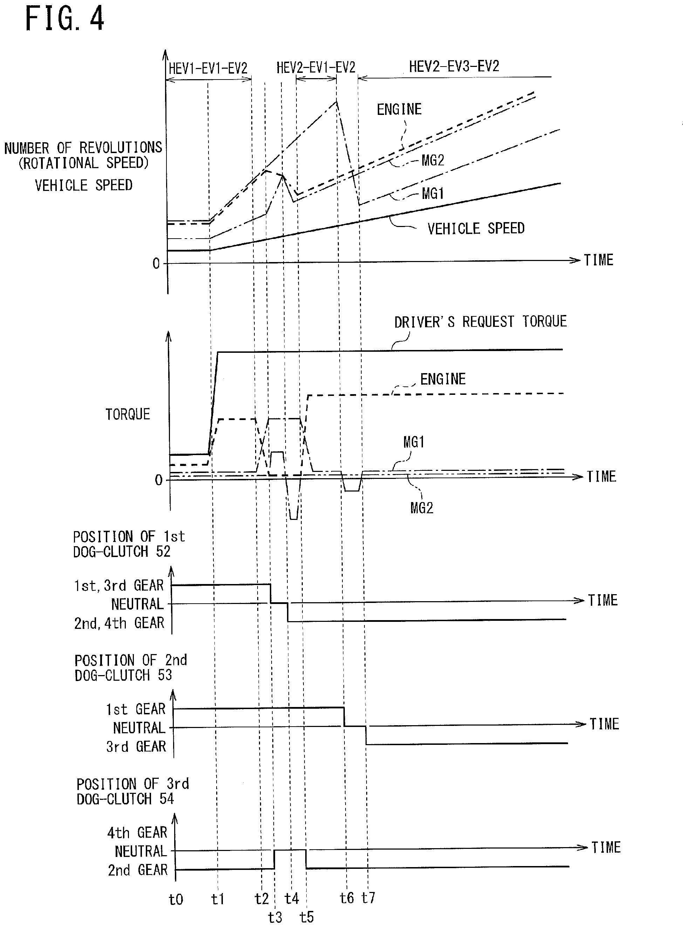

The above gear changing operations of the engine 2 and the transmission 3 are controlled by the controller 30 and will also be discussed with reference to timing charts demonstrated in Fig. 4. The timing charts in Fig. 4 illustrate gear changing tasks performed when the first gear is changed to the second gear in the *HEV* mode.

The timing charts in Fig. 4 represent, from top to bottom, speeds of the engine 2, the odd-numbered gear motor generator 23 (indicated by *MG1*)*,* the even-numbered gear motor generator 24 (indicated by *MG2*), and the vehicle 1, torque requested by the driver of the vehicle 1, torque produced by the engine 2, and torque produced by the *MG1* and *MG2,* and shiftable positions of the first dog-clutch 52, the second dog-clutch 53, and the third dog-clutch 54. The horizontal axis indicates elapsed time. The timing charts show only changes in the speeds, but not actual values of the speeds.

In Fig. 4, the speed of the vehicle 1 and the torque requested by the driver of the vehicle 1 are indicated by solid lines. The speeds of the engine 2 and torque outputted by the engine 2 are indicated by broken lines. The speed of and torque produced by the odd-numbered gear motor generator 23 are indicated by alternate long and short dash lines. The speed of and torque produced by the even-numbered gear motor generator 24 are indicated by alternate long and two short dashes line.

At time *t0,* the vehicle 1 is moving in the first gear in the *HEV* mode. The first dog-clutch 52 is in the odd-numbered gear position. The second dog-clutch 53 is in the position which establishes the first gear. The third dog-clutch 54 is in the position which establishes the second gear. The *HEV1-EV1-EV2* mode is entered as the driving mode of the vehicle 1.

The drive power produced by the engine 2 is delivered from the odd-numbered gear intermediate shaft 42 to the driven wheels 4L and 4R through the first speed gear set 45. The drive power produced by the odd-numbered gear motor generator 23 is also delivered to the driven wheels 4L and 4R through the first speed gear set 45. The drive power produced by the even-numbered gear motor generator 24 is transmittable to the driven wheels 4L and 4R through the second speed gear set 46.

At time *t1* when the accelerator pedal 60 is depressed by the driver of the vehicle 1, the drive power produced by the engine 2 is increased, thereby increasing the speeds of the engine 2 and the vehicle 1, i.e., accelerating the vehicle 1. After the vehicle 1 is accelerated, the gear change is started at time *t2.* The HCU 10, therefore, outputs a command to the ECU 11 to achieve a shift to the *HEV2-EV1-EV2* mode.

At time *t2,* the ECU 11 is responsive to the command from the HCU 10 to decrease the degree of torque produced by the engine 2 toward zero.

Simultaneously with when the torque produced by the engine 2 starts dropping, the HCU 10 outputs a command to the odd-numbered gear inverter 14 to increase the degree of torque produced by the odd-numbered gear motor generator 23 using the odd-numbered gear inverter 14 to compensate for the drop in torque produced by the engine 2. In other words, the torque produced by the odd-numbered gear motor generator 23 is increased by the drop in torque outputted by the engine 2.

At time *t3* when the torque outputted by the engine 2 has dropped to zero, the HCU 10 outputs a command to the TCU 12 to shift the first dog-clutch 52 from the odd-numbered gear position to the neutral position. Simultaneously, the HCU 10 outputs a command to the TCU 12 to shift the third dog-clutch 54 from the second gear position to the neutral position.

The torque produced by the engine 2 is, as described above, kept zero at a time when the first dog-clutch 52 is changed from the odd-numbered gear position to the neutral position, thereby ensuring a smooth shift from the odd-numbered gear position to the neutral position of the first dog clutch 52.

Similarly, the drive power exerted on the output shaft 24A of the even-numbered gear motor generator 24 is kept zero at a time when the third dog-clutch 54 is changed from the second gear position to the neutral position, thereby ensuring a smooth shift from the second gear position to the neutral position of the third dog-clutch 54.

The above selected value of the drive power produced by the engine 2 is set to zero, but however, it is not limited thereto. For example, the selected value may be determined as an approximation thereof.

After the third dog-clutch 54 is shifted to the neutral position, the HCU 10 outputs a command to the even-numbered gear inverter 15 to control the torque produced by the even-numbered gear motor generator 24 for synchronizing or bringing the rotational speed of the input shaft 41 into agreement with that of the even-numbered gear intermediate shaft 43.

The rotational speed of the input shaft 41 is controlled by the torque produced by the engine 2. The rotational speed of the even-numbered gear intermediate shaft 43 is controlled by the torque produced by the even-numbered gear motor generator 24.

The torque responsiveness of the motor generators 23 and 24 is higher than that of the engine 2. The synchronization of the speed of the input shaft 41 with that of the even-numbered gear intermediate shaft 43 is, therefore, achieved by controlling the torque outputted by the even-numbered gear motor generator 24 to bring the speed of the even-numbered gear motor generator 24 close to that of the engine 2, i.e., the input shaft 41.

Specifically, the even-numbered gear intermediate shaft 43 which is rotating at the second gear ratio is driven by the even-numbered gear motor generator 24 to raise the speed of the even-numbered gear intermediate shaft 43.

The above speed control achieves quick synchronization between the speeds of the input shaft 41 and the even-numbered gear intermediate shaft 43.

The input shaft 41 is connected to the crankshaft 2S of the engine 2 in alignment therewith, so that the speed of the input shaft 41 is identical with that of the engine 2. The HCU 10 analyzes an input from the crank angle sensor 61 (see Fig. 1) to calculate the speed of the engine 2. The crank angle sensor 61 works to measure the rotational speed of the crankshaft 2S of the engine 2.

The speed of the even-numbered gear intermediate shaft 43 is calculated using the speed of the even-numbered gear motor generator 24. Specifically, the drive power produced by the even-numbered gear motor generator 24 is decreased in speed thereof by the even-numbered motor-drive gear 51A and the even-numbered motor-driven gear 51B and then transmitted to the even-numbered gear intermediate shaft 43.

The speed of the even-numbered gear intermediate shaft 43 is, therefore, calculated using the speed of the even-numbered gear motor generator 24 and gear ratios (i.e., speed reduction ratios) of the even-numbered motor-drive gear 51A and the even-numbered motor-driven gear 51B.

Similarly, the speed of the odd-numbered gear intermediate shaft 42 is also calculated using the speed of the odd-numbered gear motor generator 23 and the speed reduction ratios of the odd-numbered motor-drive gear 50A and the odd-numbered motor-driven gear 50B.

At time *t4* when the speed of the input shaft 41 has been synchronized with that of the even-numbered gear intermediate shaft 43, the HCU 10 outputs a command to the TCU 12 to shift the first dog-clutch 52 from the neutral position to the even-numbered gear position.

Subsequently, in order to mesh the dog teeth 54A of the third dog-clutch 54 with the dog teeth 46G of the second speed output gear 46B, the HCU 10 outputs a command to the even-numbered gear inverter 15 to control the torque produced by the even-numbered gear motor generator 24 which is higher in torque responsiveness than the engine 2 for synchronizing the speed of the second speed output gear 46B with that of the output shaft 44.

Specifically, the even-numbered gear intermediate shaft 43 which rotates in synchronization with the input shaft 41 is reduced in speed by the even-numbered gear motor generator 24 to achieve the synchronization of the speed of the even-numbered gear intermediate shaft 43 with that of the output shaft 44.

The speed of the output shaft 44 is controlled by the torque produced by the odd-numbered gear motor generator 23. The speed of the second speed output gear 46B is controlled by the torque produced by the engine 2 and the even-numbered gear motor generator 24.

After time *t2*, the drive power produced by the odd-numbered gear motor generator 23 is delivered from the odd-numbered gear intermediate shaft 42 to the output shaft 44 through the first speed gear set 45, thereby keeping acceleration of the vehicle 1.

In the above condition, the speeds of the output shaft 44, the first speed gear set 45, and the third speed gear set 47 may be calculated using the speed of the odd-numbered gear motor generator 23, the speed reduction ratios of the odd-numbered motor-drive gear 50A and the odd-numbered motor-driven gear 50B, and the gear ratios of the first speed gear set 45 and the third speed gear set 47.

The drive power produced by the even-numbered gear motor generator 24 is delivered from the even-numbered gear intermediate shaft 43 to the second speed gear set 46 or the fourth speed gear set 48.

The speeds of the second speed output gear 46B and the fourth speed output gear 48B may, therefore, be calculated using the speed of the even-numbered gear motor generator 24, the speed reduction ratios of the even-numbered motor-drive gear 51A and the even-numbered motor-driven gear 51B, and the gear ratios of the second speed gear set 46 and the fourth speed gear set 48.

At time *t5* when the speeds of the output shaft 44 and the second speed output gear 46B have become identical with each other, the HCU 10 shifts the position of the third dog-clutch 54 to the second speed output gear 46B to achieve connection of the second speed output gear 46B with the output shaft 44.

The above connection of the second speed output gear 46B with the output shaft 44 enables the drive power produced by the engine 2 and the even-numbered gear motor generator 24 to be exerted on the output shaft 44. In terms of the transmission path of the drive power produced by the engine 2, the transmission 3 is in a state where a shift from the first gear to the second gear has been completed.

In other words, at time *t5,* the drive power produced by the odd-numbered gear motor generator 23 is transmitted from the odd-numbered gear intermediate shaft 42 to the output shaft 44 through the first speed gear set 45 which has the larger gear ratio (i.e., lower gear ratio), thereby causing the speed of the odd-numbered gear motor generator 23 to be higher than that of the even-numbered gear motor generator 24. The speed of the output shaft 44 is identical with that of the second speed output gear 46B.

Upon completion of the shift from the first gear to the second gear in the power transmission path for the engine 2, the drive power produced by the engine 2 is delivered from the even-numbered gear intermediate shaft 43 to the driven wheels 4L and 4R through the second speed gear set 46 because the first dog-clutch 52 is placed in the even-numbered gear position, the second dog-clutch 53 is placed in the first gear position, and the third dog-clutch 54 is placed in the second gear position.

Upon completion of the shift from the first gear to the second gear at time *t5*, the HCU 10 outputs a command to the ECU 11 to start executing the tasks in the *HEV2-EV1-EV2* mode. The ECU 11 increases the drive power outputted by the engine 2. Additionally, the HCU 10 outputs commands to the odd-numbered gear inverter 14 and the even-numbered gear inverter 15 to decrease the degrees of torque outputted by the odd-numbered gear motor generator 23 and the even-numbered gear motor generator 24. This completes a shift to the *HEV2-EV1-EV2.*

The first speed gear set 45 is larger in gear ratio than the third speed gear set 47. If, therefore, the first speed output gear 45B is kept connected to the output shaft 44 through the second dog-clutch 53 after completion of the shift from the first gear to the second gear, it will cause the speed of the odd-numbered gear motor generator 23 or the odd-numbered gear intermediate shaft 42 when the torque produced by the odd-numbered gear motor generator 23 is delivered to the driven wheels 4L and 4R through the first speed gear set 45 in a motor-assist mode to assist in driving the driven wheels 4L and 4R to be higher than that when the torque is delivered from the odd-numbered gear motor generator 23 to the driven wheels 4L and 4R through the third speed gear set 47.

A loss in energy produced by the odd-numbered gear motor generator 23 when the torque is delivered to the driven wheels 4L and 4R through the first speed gear set 45 in the motor-assist mode is, therefore, larger than that when the torque is delivered to the driven wheels 4L and 4R through the third speed gear set 47 in the motor-assist mode.

Accordingly, the HCU 10 is designed to perform tasks to reduce the energy loss of the odd-numbered gear motor generator 23.

Specifically, at time *t5*, the vehicle 1 is further accelerated, so that the speed of the odd-numbered gear intermediate shaft 42 rises. When the speed of the odd-numbered gear intermediate shaft 42 reaches a given value (will also be referred to as given threshold) at time *t6*, the HCU 10 starts a shift to the *HEV2-EV3-EV2.* The TCU 12 is controlled to shift the second dog-clutch 53 from the first gear position to the neutral position.

In the example demonstrated in Fig. 4, the degree of torque produced by the odd-numbered gear motor generator 23 is decreased before time *t6* when the speed of the odd-numbered gear intermediate shaft 42 reaches the given threshold, thereby facilitating the ease with which the second dog-clutch 53 is changed from the first gear position to the neutral position. When the odd-numbered gear motor generator 23 is generating the torque in the motor-assist mode or the power generation mode at time *t6*, the HCU 10 outputs a command to the odd-numbered gear inverter 14 to decrease the degree of torque produced by the odd-numbered gear motor generator 23.

Subsequently, in order to mesh the dog teeth 53B of the second dog-clutch 53 with the dog teeth 47G of the third speed output gear 47B, the HCU 10 outputs a command to the odd-numbered gear motor generator 23 to control the torque produced thereby so as to bring the speed of the third speed output gear 47B into agreement with that of the output shaft 44. Specifically, the speed of the odd-numbered gear intermediate shaft 42 which is rotating at a high speed following the rotation of the first speed gear set 45 is decreased using the odd-numbered gear motor generator 23 to synchronize the rotation of the third speed output gear 47B with that of the output shaft 44.

When the speeds of the output shaft 44 and the third speed output gear 47B become equal to each other at time *t7*, the HCU 10 shifts the second dog-clutch 53 to the third speed output gear 47B to achieve connection of the third speed output gear 47B with the output shaft 44.

In a period of time between times *t6* and *t7*, it is impossible to transmit the drive power using the odd-numbered gear intermediate shaft 42. The first dog-clutch 52, however, has been shifted to the even-numbered gear position, while the third dog-clutch 54 has been shifted to the second gear position, thereby enabling the drive power produced by the engine 2 to be delivered from the even-numbered gear intermediate shaft 43 to the driven wheels 4L and 4R through the second speed gear set 46 to keep accelerating the vehicle 1.

In other words, the drive power transmission path in which the torque is delivered from the engine 2 to the driven wheels 4L and 4R is kept in the second gear.

In the above way, the shift from the *HEV1-EV1-EV2* mode to the *HEV2-EV3-EV2* mode is completed.

The switch from the *HEV2-EV3-EV2* mode to the *HEV3-EV3-EV2* mode or from the *HEV3-EV3-EV2* mode to the *HEV3-EV3-EV4* mode, that is, the shift from the second gear to the third gear and the switch from the *HEV3-EV3-EV4* mode to the *HEV4-EV3-EV4*, that is, the shift from the third gear to the fourth gear are performed in the same way as described above, and explanation thereof in detail will be omitted here.

As apparent from the above discussion, the transmission 3 mounted in the vehicle 1 in this embodiment includes the input shaft 41 through which the drive power produced by the engine 2 is transmitted, the odd-numbered gear intermediate shaft 42 which is arranged coaxially with the input shaft 41 and rotatable relative to the input shaft 41, the even-numbered gear intermediate shaft 43 which is arranged coaxially with the input shaft 41, faces the odd-numbered gear intermediate shaft 42 in the axial direction of the input shaft 41, and is rotatable relative to the input shaft 41, and the output shaft 44 which extend parallel to the odd-numbered gear intermediate shaft 42 and the even-numbered gear intermediate shaft 43 and transmit the drive power to the driven wheels 4L and 4R.

The transmission 3 also includes the odd-numbered gear motor generator 23 and the even-numbered gear motor generator 24. The odd-numbered gear motor generator 23 is connected to the odd-numbered gear intermediate shaft 42 to achieve transmission of drive power therebetween. The even-numbered gear motor generator 24 is connected to the even-numbered gear intermediate shaft 43 to achieve transmission of drive power therebetween.

The transmission 3 also includes the first speed gear set 45 and the third speed gear set 47 which are different in gear ratio from each other and capable of connecting the odd-numbered gear intermediate shaft 42 to the output shaft 44 to achieve transmission of drive power therebetween, and the second speed gear set 46 and the fourth speed gear set 48 which are different in gear ratio from each other and capable of connecting the even-numbered gear intermediate shaft 43 to the output shaft 44.

Further, the transmission 3 includes the first dog-clutch 52 which is switchable among the neutral position, the odd-numbered gear position where the input shaft 41 and the odd-numbered gear intermediate shaft 42 are connected together, and the even-numbered gear position where the input shaft 41 and the even-numbered gear intermediate shaft 43 are connected together.

The above structure of the transmission 3 is capable of shifting the gears smoothly without use of a plurality of clutches, such as in dual-clutch transmissions and enables the transmission 3 to be reduced in size and produced in a decreased cost.

When required to change from one of the odd-numbered gears to one of the even-numbered gears, the transmission 3 uses the torque produced by the odd-numbered gear motor generator 23 in assisting the torque output of the engine 2, thereby eliminating a risk of lack of the torque output of the engine 2 during the gear change. Alternatively, when required to change from one of the even-numbered gears to one of the odd-numbered gears, the transmission 3 uses the torque produced by the odd-numbered gear motor generator 24 in assisting the torque output of the engine 2, thereby eliminating a risk of lack of the torque output of the engine 2 during the gear change. This minimizes a risk of lack of ability of the engine 2 to accelerate the vehicle 1 or driver's discomfort during the acceleration of the vehicle 1.

When required to change from one of the odd-numbered gears to one of the even-numbered gears, the transmission 3 uses the even-numbered gear motor generator 24 to synchronize the sped of the input shaft 41 with that of the even-numbered gear intermediate shaft 43. Alternatively, when required to change from one of the even-numbered gears to one of the odd-numbered gears, the transmission 3 uses the odd-numbered gear motor generator 23 to synchronize the speed of the input shaft 41 with that of the odd-numbered gear intermediate shaft 42. This eliminates the need for a complicated structure of synchronizer and also enables the transmission 3 to be designed to have a simple structure and produced at a decreased cost.

In this embodiment, the disturbance arising from a variation in torque output of the engine 2 to the gear change in the transmission 3 is minimized by reducing the degree of torque produced by the engine 2. The synchronization of the speed of the input shaft 41 with that of the odd-numbered gear intermediate shaft 42 or the even-numbered gear intermediate shaft 43 is also achieved in a decreased amount of time.

The first speed gear set 45, as described already, includes the first speed input gear 45A which is mounted on the odd-numbered gear intermediate shaft 42 to be rotatable together and the first speed output gear 45B which is mounted on the output shaft 44 to be rotatable relative thereto and meshes with the first speed input gear 45A. Similarly, the third speed gear set 47 includes the third speed input gear 47A which is mounted on the odd-numbered gear intermediate shaft 42 to be rotatable together and the third speed output gear 47B which is mounted on the output shaft 44 to be rotatable relative thereto and meshes with the third speed input gear 47A.

The second speed gear set 46, as described already, includes the second speed input gear 46A which is mounted on the even-numbered gear intermediate shaft 43 to be rotatable together and the second speed output gear 46B which is mounted on the output shaft 44 to be rotatable relative thereto and meshes with the second speed input gear 46A. Similarly, the fourth speed gear set 48 includes the fourth speed input gear 48A which is mounted on the even-numbered gear intermediate shaft 43 to be rotatable together and the fourth speed output gear 48B which is mounted on the output shaft 44 to be rotatable relative thereto and meshes with the fourth speed input gear 48A.

The transmission 3 in this embodiment is also equipped with the second dog-clutch 53 which works to connect the first speed output gear 45B or the third speed output gear 47B to the output shaft 44, so that it rotates along with the output shaft 44, thereby establishing the first or third gear.

The transmission 3 also includes the third dog-clutch 54 which works to connect the second speed output gear 46B or the fourth speed output gear 48B to the output shaft 44, so that it rotates along with the output shaft 44, thereby establishing the second or fourth gear.

The smooth change of the multi-speed gears may, therefore, be achieved in the simple structure of the transmission 3 by shifting the first dog-clutch 52 to the odd-numbered gear position or the even-numbered gear position and then connecting one of the first speed output gear 45B to the fourth speed output gear 48B to the output shaft 44 through the second dog-clutch 53 or the third dog-clutch 54. This ensures the gear change without a deterioration of drivability of the vehicle 1 and a lack of acceleration of the vehicle 1.

The transmission 3 is also designed to have the odd-numbered motor-driven gear 50B which is arranged closest to the first dog-clutch 52 in the axial direction of the odd-numbered gear intermediate shaft 42 and also have the first speed input gear 45A and the third speed input gear 47A which are located on the opposite side of the odd-numbered motor-driven gear 50B to the first dog-clutch 52.

The transmission 3 also has the even-numbered motor-driven gear 51B located closest to the first dog-clutch 52 in the axial direction of the even-numbered gear intermediate shaft 43 and also has the second speed input gear 46A and the fourth speed input gear 48A which are located on the opposite side of the even-numbered motor-driven gear 51B to the first dog-clutch 52.

The odd-numbered motor-driven gear 50B, the third speed input gear 47A, and the first speed input gear 45A are arranged in order of increasing distance from the first dog-clutch 52 in the axial direction of the odd-numbered gear intermediate shaft 42 and also have diameters decreasing in this order.

Similarly, the even-numbered motor-driven gear 51B, the fourth speed input gear 48A, and the second speed input gear 46A are arranged in order of increasing distance from the first dog-clutch 52 in the axial direction of the even-numbered gear intermediate shaft 43 and also has diameters decreasing in this order.

The above arrangements enable the odd-numbered gear motor generator 23 to be disposed to overlap the first speed input gear 45A and the third speed input gear 47A in a direction perpendicular to the axis of the odd-numbered gear intermediate shaft 42 in order to locate the odd-numbered gear motor generator 23 close to the odd-numbered gear intermediate shaft 42.

The above arrangements also enable the even-numbered gear motor generator 24 to be disposed to overlap the second speed input gear 46A and the fourth speed input gear 48A in a direction perpendicular to the axis of the even-numbered gear intermediate shaft 43 in order to locate the even-numbered gear motor generator 24 close to the even-numbered gear intermediate shaft 43. This enables the transmission 3 to be reduced in size thereof.

The transmission 3 has the first speed gear set 45 and the third speed gear set 47 designed as gear sets which are mounted on the odd-numbered gear intermediate shaft 42 and the output shaft 44, respectively, and have odd gear ratios different from each other. The transmission 3 also has the second speed gear set 46 and the fourth speed gear set 48 designed as gear sets which are mounted on the even-numbered gear intermediate shaft 43 and the output shaft 44, respectively, and have even gear ratios different from each other.

Accordingly, when required to change from one of the odd gear ratios to one of the even gear ratios, the transmission 3 works to decrease the degree of torque produced by the engine 2 down to zero, increase the degree of torque produced by the odd-numbered gear motor generator 23 to compensate for a drop in torque outputted by the engine 2, synchronize the speed of the even-numbered gear intermediate shaft 43 with that of the input shaft 41, and then shift the first dog-clutch 52 to the even-numbered gear position.

Alternatively, when required to change from one of the even gear ratios to one of the odd gear ratios, the transmission 3 works to decrease the degree of torque produced by the engine 2 down to zero, increase the degree of torque produced by the even-numbered gear motor generator 24 to compensate for a drop in torque outputted by the engine 2, synchronize the speed of the odd-numbered gear intermediate shaft 42 with that of the input shaft 41, and then shift the first dog-clutch 52 to the odd-numbered gear position.

The above control ensures the stability in achieving the gear change from one the odd gears to one of the even gears or vice versa, thereby eliminating the risk of deterioration of drivability of the vehicle 1.

The transmission 3 in this embodiment is also designed to have the first dog-clutch 52, the second dog-clutch 53, and the third dog-clutch 54 which serve as switching members, thereby achieving the gear change using the first dog-clutch 52, the second dog-clutch 53, and the third dog-clutch 54 without use of synchronizers which are more complex in mechanism than the first dog-clutch 52, the second dog-clutch 53, and the third dog-clutch 54. This enables the transmission 3 to have a simplified structure and also to be produced at a decreased cost.

The first dog-clutch 52 is capable of achieving quick and smooth connection of the input shaft 41 and the odd-numbered gear intermediate shaft 42 at a time when the speed of the input shaft 41 is synchronized with that of the odd-numbered gear intermediate shaft 42.

Additionally, the first dog-clutch 52, the second dog-clutch 53, and the third dog-clutch 54 are designed to have simplified structures, thereby resulting in improvement of durability thereof, which enables them to be used for an increased period of time.

The vehicle 1 is equipped with the coupling 33 which is made of a damper and connects the engine 2 with the input shaft 41 at all times to deliver the torque from the engine 2 to the input shaft 41.

When required to shift the gears, the transmission 3 use the odd-numbered gear motor generator 23 or the even-numbered gear motor generator 24 to bring the speed of the input shaft 41 into agreement with that of the odd-numbered gear intermediate shaft 42 or the even-numbered gear intermediate shaft 43, thereby ensuring the stability in connecting the odd-numbered gear intermediate shaft 42 or the even-numbered gear intermediate shaft 43 with the input shaft 41 through the first dog-clutch 52. This eliminates the need for a clutch used to connect or disconnect the engine 2 to or from the input shaft 41.

The above arrangements enable the coupling 33 which is made of a small-sized and inexpensive damper to be used instead of the clutch device, which permits the transmission 3 to be reduced in size and produced at a decreased cost.

The coupling 33 may alternatively be implemented by a clutch device working to connect or disconnect the engine 2 to or from the input shaft 41.

The connect or disconnect of the engine 2 to or from the input shaft 41 using the clutch device, as referred to herein, means the fact that when it is required to deliver torque from the engine 2 to the input shaft 41, the clutch device mechanically connects the crankshaft 2S of the engine 2 with the input shaft 41, or alternatively, when it is not required to deliver torque from the engine 2 to the input shaft 41, the clutch device mechanically disconnect the crankshaft 2S of the engine 2 from the input shaft 41.

The use of the above clutch device enables the transmission of torque from the engine 2 to the input shaft 41 to be mechanically blocked when it is required to change the gears in the transmission 3, thereby permitting the odd-numbered gear motor generator 23 or the even-numbered gear motor generator 24 to be used to synchronize the speed of the input shaft 41 with that of the odd-numbered gear intermediate shaft 42 or the even-numbered gear intermediate shaft 43 quickly. This achieves quick gear shifts in the transmission 3.

The transmission 3 is, as described above, designed to have the odd-numbered gear intermediate shaft 42 and the output shaft 44 which are connectable together using the first speed gear set 45 or the third speed gear set 47. The transmission 3 is also designed to have the even-numbered gear intermediate shaft 43 and the output shaft 44 which are connectable together using the second speed gear set 46 or the fourth speed gear set 48. Such a structure may, however, be optically altered.

For instance, the connection of the odd-numbered gear intermediate shaft 42 (i.e., the first intermediate shaft) and the output shaft 44 may alternatively be made using the first speed gear set 45 or the second speed gear set 46 which is different in gear ratio from the first speed gear set 45. The connection of the even-numbered gear intermediate shaft 43 (i.e., the second intermediate shaft) and the output shaft 44 may alternatively be made using the third speed gear set 47 or the fourth speed gear set 48 which is different in gear ratio than the first speed gear set 45 and the second speed gear set.

## Claims

1. A hybrid vehicle (1) equipped with a transmission (3) working to transmit drive power produced by an internal combustion engine (2) to a driven wheel (4L, 4R) and change a speed of the drive power, wherein
the transmission comprises:
an input shaft (41) to which drive power produced by the internal combustion engine is transmitted;
a first intermediate shaft (42) which is arranged coaxially with the input shaft and rotatable relative to the input shaft, the first intermediate shaft having the input shaft extending inside the first intermediate shaft;
a second intermediate shaft (43) which is arranged coaxially with the input shaft, aligned with the first intermediate shaft in an axial direction of the input shaft, and rotatable relative to the input shaft, the second intermediate shaft having the input shaft extending inside the second intermediate shaft;
an output shaft (44) which extends parallel to the first intermediate shaft and the second intermediate shaft and serves to deliver the drive power to the driven wheel;
a first rotating electrical machine (23) which is connected to the first intermediate shaft to transmit drive between the first rotating electrical machine and the first intermediate shaft;
a second rotating electrical machine (24) which is connected to the second intermediate shaft to transmit drive power between the second rotating electrical machine and the second intermediate shaft;
first gear sets (45, 47) each of which works to connect the first intermediate shaft with the output shaft to transmit drive power therebetween and which establish a plurality of gears in the transmission which are different in gear ratio from each other;
second gear sets (46, 48) each of which works to connect the second intermediate shaft with the output shaft to transmit drive power therebetween and which establish a plurality of gears in the transmission which are different in gear ratio than those of the first gear sets; and
a first switching member (52) which works to switch among a neutral position, a first position, and a second position, the first position being to achieve connection of the input shaft and the first intermediate shaft, the second position being to achieve connection of the input shaft and the second intermediate shaft, and wherein
the first switching member is disposed between the first intermediate shaft and the second intermediate shaft in the axial direction of the input shaft.

2. The hybrid vehicle as claimed in claim 1, wherein the first gear sets include a plurality of first intermediate shaft gears (45A, 47A) arranged to be rotatable along with the first intermediate shaft and a plurality of first output shaft gears (45B, 47B) arranged to be rotatable relative to the output shaft and each of which meshes with one of the first intermediate shaft gears,
the second gear sets include a plurality of second intermediate shaft gears (46A, 48A) arranged to be rotatable along with the second intermediate shaft and a plurality of second output shaft gears (46B, 48B) which are arranged to be rotatable relative to the output shaft and each of which meshes with one of the second intermediate shaft gears, and
the transmission also includes a second switching member (53) and a third switching member (54), the second switching member working to connect a selected one of the first output shaft gears with the output shaft to rotate together to make a corresponding one of the gears established by the first gear sets, the third switching member working to connect a selected one of the second output shaft gears with the output shaft to rotate together to make a corresponding one of the gears established by the second gear sets.

3. The hybrid vehicle as claimed in claim 1 or 2, wherein
the transmission also includes a first rotating electrical machine gear set (50A, 50B) which serves to connect the first rotating electrical machine with the first intermediate shaft to transmit drive power therebetween and a second rotating electrical machine gear set (51A, 51B) which serves to connect the second rotating electrical machine with the second intermediate shaft to transmit drive power therebetween,
the first rotating electrical machine gear set includes a first drive gear (50A) which is mounted on the first rotating electrical machine and a first driven gear (50B) which is rotatable along with the first intermediate shaft and meshes with the first drive gear,
the second rotating electrical machine gear set includes a second drive gear (51A) which is mounted on the second rotating electrical machine and a second driven gear (51B) which is rotatable along with the second intermediate shaft and meshes with the second drive gear,
the first driven gear is located closest to the first switching member in an axial direction of the first intermediate shaft, and the first intermediate shaft gears are located on an opposite side of the first driven gear to the first switching member,
the second driven gear is located closest to the first switching member in an axial direction of the second intermediate shaft, and the second intermediate shaft gears are located on an opposite side of the second driven gear to the first switching member,
the first intermediate shaft gears and the first driven gear are located in order of increasing distance from the first switching member in the axial direction of the first intermediate shaft and have diameters decreasing in this order, and
the second intermediate shaft gears and the second driven gear are located in order of increasing distance from the first switching member in the axial direction of the second intermediate shaft and have diameters decreasing in this order.

4. The hybrid vehicle as claimed in claim 2 or 3, wherein each of the first switching member, the second switching member, and the third switching member is made of a dog-clutch.

5. The hybrid vehicle as claimed in any one of claims 1 to 4, wherein the first gear set establishes a plurality of odd-numbered gears different in gear ratio from each other, and the second gear set establishes a plurality of even-numbered gears different in gear ratio from each other.

6. The hybrid vehicle as claimed in any one of claims 1 to 5, wherein a damper is provided which connects the internal combustion engine with the input shaft at all times to transmit drive power produced by the internal combustion engine to the input shaft.

7. The hybrid vehicle as claimed in any one of claims 1 to 5, wherein a clutch device is provided which works to connect or disconnect the internal combustion engine with or from the input shaft.

## Patentansprüche

1. Hybridfahrzeug (1), welches mit einem Getriebe (3) ausgestattet ist, welches arbeitet, eine Antriebsleistung, welche durch einen Verbrennungsmotor (2) erzeugt ist, auf ein Antriebsrad (4L, 4R) zu übertragen und eine Geschwindigkeit der Antriebsleistung zu ändern, wobei das Getriebe umfasst:
eine Eingabewelle (41), auf welche eine Antriebsleistung übertragen ist, welche durch den Verbrennungsmotor erzeugt ist;
eine erste Zwischenwelle (42), welche koaxial zu der Eingabewelle und rotierbar relativ zu der Eingabewelle angeordnet ist, wobei die erste Zwischenwelle die sich innerhalb der ersten Zwischenwelle erstreckende Eingabewelle aufweist;
eine zweite Zwischenwelle (43), welche koaxial zu der Eingabewelle angeordnet ist, welche mit der ersten Zwischenwelle in einer axialen Richtung der Eingabewelle ausgerichtet ist, und welche relativ zu der Eingabewelle rotierbar ist, wobei die zweite Zwischenwelle die sich innerhalb der zweiten Zwischenwelle erstreckende Eingabewelle aufweist;
eine Ausgabewelle (44), welche sich parallel zu der ersten Zwischenwelle und der zweiten Zwischenwelle erstreckt und dazu dient, die Antriebsleistung dem Antriebsrad zuzuführen;
eine erste rotierende elektrische Maschine (23), welche mit der ersten Zwischenwelle verbunden ist, um einen Antrieb zwischen der ersten rotierenden elektrischen Maschine und der ersten Zwischenwelle zu übertragen;
eine zweite rotierende elektrische Maschine (24), welche mit der zweiten Zwischenwelle verbunden ist, um eine Antriebsleistung zwischen der zweiten rotierenden elektrischen Maschine und der zweiten Zwischenwelle zu übertragen;
erste Zahnradsätze (45, 47), welche jeweils arbeiten, die erste Zwischenwelle mit der Ausgabewelle zu verbinden, um eine Antriebsleistung dazwischen zu übertragen und welche eine Mehrzahl von Gängen in dem Getriebe herstellen, welche in einem Übersetzungsverhältnis verschieden voneinander sind;
zweite Zahnradsätze (46, 48), welche jeweils arbeiten, die zweite Zwischenwelle mit der Ausgabewelle zu verbinden, um eine Antriebsleistung dazwischen zu übertragen und welche eine Mehrzahl von Gängen in dem Getriebe herstellen, welche in einem Übersetzungsverhältnis verschieden von diejenigen der ersten Zahnradsatze sind; und
ein erstes Schaltelement (52), welches arbeitet, unter einer neutralen Position, einer ersten Position und einer zweiten Position zu schalten, wobei die erste Position besteht, um eine Verbindung der Eingabewelle und der ersten Zwischenwelle zu erreichen, die zweite Position besteht, eine Verbindung der Eingabewelle und der zweiten Zwischenwelle zu erreichen, und wobei
das erste Schaltelement zwischen der ersten Zwischenwelle und der zweiten Zwischenwelle in der axialen Richtung der Eingabewelle angeordnet ist.

2. Hybridfahrzeug nach Anspruch 1, wobei die ersten Zahnradsätze eine Mehrzahl von ersten Zwischenwellenzahnrädern (45A, 47A) umfassen, welche angeordnet sind, um zusammen mit der ersten Zwischenwelle rotierbar zu sein, und eine Mehrzahl von ersten Ausgabewellenzahnrädern (45B, 47B) umfassen, welche angeordnet sind, um relativ zu der Ausgabewelle rotierbar zu sein und wobei jedes von ihnen mit einem der ersten Zwischenwellenzahnrädern kämmt,
wobei die zweiten Zahnradsätze eine Mehrzahl von zweiten Zwischenwellenzahnrädern (46A, 48A) umfassen, welche angeordnet sind, um zusammen mit der zweiten Zwischenwelle rotierbar zu sein, und eine Mehrzahl von zweiten Ausgabewellenzahnrädern (46B, 48B) umfassen, welche angeordnet sind, um relativ zu der Ausgabewelle rotierbar zu sein und wobei jedes von ihnen mit einem der zweiten Zwischenwellenzahnrädern kämmt, und
wobei das Getriebe ferner ein zweites Schaltelement (53) und ein drittes Schaltelement (54) umfasst, wobei das zweite Schaltelement arbeitet, ein ausgewähltes der ersten Ausgabewellenzahnräder mit der Ausgabewelle zu verbinden, um zusammen zu rotieren, um einen entsprechenden der Gänge zu erstellen, welcher durch die ersten Zahnradsätze hergestellt ist, wobei das dritte Schaltelement arbeitet, ein ausgewähltes der zweiten Ausgabewellenzahnräder mit der Ausgabewelle zu verbinden, um zusammen zu rotieren, um einen entsprechenden der Gänge zu erstellen, welcher durch die zweiten Zahnradsätze hergestellt ist.

3. Hybridfahrzeug nach Anspruch 1 oder 2, wobei das Getriebe ferner einen ersten rotierenden elektrischen Maschinenzahnradsatz (50A, 50B), welcher dazu dient, die erste rotierende elektrische Maschine mit der ersten Zwischenwelle zu verbinden, um eine Antriebsleistung dazwischen zu übertragen, und einen zweiten rotierenden elektrischen Maschinenzahnradsatz (51A, 51B) umfasst, welcher dazu dient, die zweite rotierende elektrische Maschine mit der zweiten Zwischenwelle zu verbinden, um eine Antriebsleistung dazwischen zu übertragen,
wobei der erste rotierende elektrische Maschinenzahnradsatz ein erstes Antriebszahnrad (50A), welches an der ersten rotierenden elektrischen Maschine montiert ist, und ein erstes Abtriebszahnrad (50B) umfasst, welches zusammen mit der ersten Zwischenwelle rotierbar ist und mit dem ersten Antriebzahnrad kämmt,
wobei der zweite rotierende elektrische Maschinenzahnradsatz ein zweites Antriebszahnrad (51A), welches an der zweiten rotierenden elektrischen Maschine montiert ist, und ein zweites Abtriebszahnrad (51B) umfasst, welches zusammen mit der zweiten Zwischenwelle rotierbar ist und mit dem zweiten Antriebzahnrad kämmt,
wobei das erste Abtriebszahnrad am nächsten zu dem ersten Schaltelement in einer axialen Richtung der ersten Zwischenwelle angeordnet ist, und die ersten Zwischenwellenzahnräder an einer entgegengesetzten Seite des ersten Abtriebszahnrads zu dem ersten Schaltelement angeordnet sind,
wobei das zweite Abtriebszahnrad am nächsten zu dem ersten Schaltelement in einer axialen Richtung der zweiten Zwischenwelle angeordnet ist, und die zweiten Zwischenwellenzahnräder an einer entgegengesetzten Seite des zweiten Abtriebszahnrads zu dem ersten Schaltelement angeordnet sind,
wobei die ersten Zwischenwellenzahnräder und das erste Abtriebszahnrad in Reihenfolge einer ansteigenden Distanz von dem ersten Schaltelement in der axialen Richtung der ersten Zwischenwelle angeordnet sind und Durchmesser aufweisen, welche sich in dieser Reihenfolge verringern, und
wobei die zweiten Zwischenwellenzahnräder und das zweite Abtriebszahnrad in Reihenfolge einer ansteigenden Distanz von dem ersten Schaltelement in der axialen Richtung der zweiten Zwischenwelle angeordnet sind und Durchmesser aufweisen, welche sich in dieser Reihenfolge verringern.

4. Hybridfahrzeug nach Anspruch 2 oder 3, wobei jedes aus dem ersten Schaltelement, dem zweiten Schaltelement und dem dritten Schaltelement als eine Klauenkupplung aufgebaut ist.

5. Hybridfahrzeug nach einem der Ansprüche 1 bis 4, wobei der erste Zahnradsatz eine Mehrzahl von ungeradzahligen Gängen hergestellt, welche in einem Übersetzungsverhältnis verschieden voneinander sind, und der zweite Zahnradsatz eine Mehrzahl von geradzahligen Gängen hergestellt, welche in einem Übersetzungsverhältnis verschieden voneinander sind.

6. Hybridfahrzeug nach einem der Ansprüche 1 bis 5, wobei ein Dämpfer bereitgestellt ist, welcher den Verbrennungsmotor mit der Eingabewelle zu jeder Zeit verbindet, um eine Antriebsleistung, welche durch den Verbrennungsmotor erzeugt ist, auf die Eingabewelle zu übertragen.

7. Hybridfahrzeug nach einem der Ansprüche 1 bis 5, wobei eine Kupplungsvorrichtung bereitgestellt ist, welche arbeitet, um den Verbrennungsmotor mit der Eingabewelle zu verbinden oder davon zu lösen.

## Revendications

1. Véhicule hybride (1) équipé d'une transmission (3) fonctionnant pour transmettre une puissance d'entraînement produite par un moteur à combustion interne (2) à une roue motrice (4L, 4R) et modifier une vitesse de la puissance d'entraînement, dans lequel
la transmission comprend :
un arbre d'entrée (41) auquel la puissance d'entraînement produite par le moteur à combustion interne est transmise ;
un premier arbre intermédiaire (42) qui est agencé de manière coaxiale avec l'arbre d'entrée et pouvant tourner par rapport à l'arbre d'entrée, le premier arbre intermédiaire ayant l'arbre d'entrée s'étendant à l'intérieur du premier arbre intermédiaire ;
un deuxième arbre intermédiaire (43) qui est agencé de manière coaxiale avec l'arbre d'entrée, aligné avec le premier arbre intermédiaire dans une direction axiale de l'arbre d'entrée, et pouvant tourner par rapport à l'arbre d'entrée, le deuxième arbre intermédiaire ayant l'arbre d'entrée s'étendant à l'intérieur du deuxième arbre intermédiaire ;
un arbre de sortie (44) qui s'étend parallèlement au premier arbre intermédiaire et au deuxième arbre intermédiaire et sert à distribuer la puissance d'entraînement à la roue motrice ;
une première machine électrique rotative (23) qui est connectée au premier arbre intermédiaire pour transmettre l'entraînement entre la première machine électrique rotative et le premier arbre intermédiaire ;
une deuxième machine électrique rotative (24) qui est connectée au deuxième arbre intermédiaire pour transmettre la puissance d'entraînement entre la deuxième machine électrique rotative et le deuxième arbre intermédiaire ;
des premiers trains d'engrenage (45, 47) dont chacun fonctionne pour connecter le premier arbre intermédiaire à l'arbre de sortie pour transmettre une puissance d'entraînement entre ceux-ci et qui établissent une pluralité d'engrenages dans la transmission qui sont différents en rapport de transmission les uns des autres ;
des deuxièmes trains d'engrenage (46, 48) dont chacun fonctionne pour connecter le deuxième arbre intermédiaire à l'arbre de sortie pour transmettre une puissance d'entraînement entre ceux-ci et qui établissent une pluralité d'engrenages dans la transmission qui sont différents en rapport de transmission de ceux des premiers trains d'engrenage ; et
un premier élément de commutation (52) qui fonctionne pour commuter parmi une position neutre, une première position, et une deuxième position, la première position étant destinée à obtenir la connexion de l'arbre d'entrée et du premier arbre intermédiaire, la deuxième position étant destinée à obtenir la connexion de l'arbre d'entrée et du deuxième arbre intermédiaire, et dans lequel
le premier élément de commutation est disposé entre le premier arbre intermédiaire et le deuxième arbre intermédiaire dans la direction axiale de l'arbre d'entrée.

2. Véhicule hybride selon la revendication 1, dans lequel les premiers trains d'engrenage comportent une pluralité de premiers engrenages d'arbre intermédiaire (45A, 47A) agencés pour pouvoir tourner conjointement avec le premier arbre intermédiaire et une pluralité de premiers engrenages d'arbre de sortie (45B, 47B) agencés pour pouvoir tourner par rapport à l'arbre de sortie et dont chacun s'engrène avec un des premiers engrenages d'arbre intermédiaire,
les deuxièmes trains d'engrenage comportent une pluralité de deuxièmes engrenages d'arbre intermédiaire (46A, 48A) agencés pour pouvoir tourner conjointement avec le deuxième arbre intermédiaire et une pluralité de deuxièmes engrenages d'arbre de sortie (46B, 48B) qui sont agencés pour pouvoir tourner par rapport à l'arbre de sortie et dont chacun s'engrène avec un des deuxièmes engrenages d'arbre intermédiaire, et la transmission comporte également un deuxième élément de commutation (53) et un troisième élément de commutation (54), le deuxième élément de commutation fonctionnant pour connecter un sélectionné des premiers engrenages d'arbre de sortie à l'arbre de sortie pour qu'ils tournent ensemble pour rendre un correspondant des engrenages établi par les premiers trains d'engrenage, le troisième élément de commutation fonctionnant pour connecter un sélectionné des deuxièmes engrenages d'arbre de sortie avec l'arbre de sortie pour les faire tourner ensemble pour rendre un correspondant des engrenages établi par les deuxièmes trains d'engrenage.

3. Véhicule hybride selon la revendication 1 ou 2, dans lequel
la transmission comporte également un premier train d'engrenages de machine électrique rotative (50A, 50B) qui sert à connecter la première machine électrique rotative au premier arbre intermédiaire pour transmettre une puissance d'entraînement entre ceux-ci et un deuxième train d'engrenages de machine électrique rotative (51A, 51B) qui sert à connecter la deuxième machine électrique rotative au deuxième arbre intermédiaire pour transmettre la puissance d'entraînement entre eux,
le premier train d'engrenages de machine électrique rotative comporte un premier engrenage d'entraînement (50A) qui est monté sur la première machine électrique rotative et un premier engrenage entraîné (50B) qui peut tourner conjointement avec le premier arbre intermédiaire et s'engrène avec le premier engrenage d'entraînement, le deuxième train d'engrenages de machine électrique rotative comporte un deuxième engrenage d'entraînement (51A) qui est monté sur la deuxième machine électrique rotative et un deuxième engrenage entraîné (51B) qui peut tourner conjointement avec le deuxième arbre intermédiaire et s'engrène avec le deuxième engrenage d'entraînement,
le premier engrenage entraîné est positionné plus près du premier élément de commutation dans une direction axiale du premier arbre intermédiaire, et les premiers engrenages d'arbre intermédiaire sont positionnés sur un côté opposé du premier engrenage entraîné par rapport au premier élément de commutation,
le deuxième engrenage entraîné est positionné plus près du premier élément de commutation dans une direction axiale du deuxième arbre intermédiaire, et les deuxièmes engrenages d'arbre intermédiaire sont positionnés sur un côté opposé du deuxième engrenage entraîné par rapport au premier élément de commutation,
les premiers engrenages d'arbre intermédiaire et le premier engrenage entraîné sont positionnés afin d'augmenter la distance à partir du premier élément de commutation dans la direction axiale du premier arbre intermédiaire et présentent des diamètres décroissant dans cet ordre, et
les deuxièmes engrenages d'arbre intermédiaire et le deuxième engrenage entraîné sont positionnés afin d'augmenter la distance à partir du premier élément de commutation dans la direction axiale du deuxième arbre intermédiaire et présentent des diamètres décroissants dans cet ordre.

4. Véhicule hybride selon la revendication 2 ou 3, dans lequel chacun du premier élément de commutation, du deuxième élément de commutation, et du troisième élément de commutation est composé d'un embrayage à crabots.

5. Véhicule hybride selon l'une quelconque des revendications 1 à 4, dans lequel le premier train d'engrenages établit une pluralité d'engrenages de nombre impair différents en rapport de transmission les uns des autres, et le deuxième train d'engrenages établit une pluralité d'engrenages de nombre pair différents en rapport de transmission les uns des autres.

6. Véhicule hybride selon l'une quelconque des revendications 1 à 5, dans lequel un amortisseur est fourni qui connecte le moteur à combustion interne à l'arbre d'entrée à tout moment pour transmettre la puissance d'entraînement produite par le moteur à combustion interne à l'arbre d'entrée.

7. Véhicule hybride selon l'une quelconque des revendications 1 à 5, dans lequel un dispositif d'embrayage est fourni qui fonctionne pour connecter ou déconnecter le moteur à combustion interne à ou de l'arbre d'entrée.
